# EUROPÄISCHE PATENTANMELDUNG

(11) **EP 3 632 654 A1**
(43) Veröffentlichungstag der Anmeldung: **08.04.2020**
(21) Anmeldenummer: 19201563.4
(22) Anmeldetag: 04.10.2019
(51) Int. Cl.: B29C 64/153, B29C 64/245, B29C 64/25, B29C 64/255, B29C 64/30, B22F 3/105

(54) **VORRICHTUNG UND VERFAHREN ZUM SELEKTIVEN LASERSCHMELZEN UND/ODER LASERSINTERN**

(30) Priorität: 04.10.2018 DE 102018007812; 04.10.2018 DE 102018007813
(71) Anmelder: Lampalzer, Ralf, 58456 Witten (DE)
(72) Erfinder: Lampalzer, Ralf, 58456 Witten (DE)
(74) Vertreter: Verscht, Thomas Kurt Albert

(57) **Zusammenfassung**

Bei einer Vorrichtung zum selektiven Laserschmelzen und/oder Lasersintern mit einem Grundkörper, welche wenigstens einen Raum aufweist, wobei der wenigstens eine Raum ein Bauraum und/oder ein Vorratsraum für ein Pulver ist, ergibt sich die Einsparung von Pulver die Erhöhung der Einsatzmöglichkeiten der Vorrichtung dadurch, dass die Vorrichtung ferner wenigstens ein Passstück aufweist, wobei im Betrieb das wenigstens eine Passstück in dem wenigstens einen Raum angeordnet ist, wobei in einer ersten Konfiguration das wenigstens eine Passstück vertikal relativ zu dem Grundkörper bewegbar ist und in einer zweiten Konfiguration das wenigstens eine Passstück mit dem Grundkörper fest verbunden ist.

## Beschreibung

Die vorliegende Erfindung betrifft eine Vorrichtung zum selektiven Laserschmelzen und/oder Lasersintern mit einem Grundkörper, welche wenigstens einen Raum aufweist, wobei der wenigstens eine Raum ein Bauraum und/oder ein Vorratsraum für ein Pulver ist, wobei die Vorrichtung ferner wenigstens ein Passstück aufweist, wobei im Betrieb das wenigstens eine Passstück in dem wenigstens einen Raum angeordnet ist. Genauer betrifft die vorliegende Erfindung ein Verfahren und eine Vorrichtung zur Anpassung der Bauraumgeometrie bei selektivem Laserschmelzen oder selektivem Lasersintern.

### Hintergrund der Technik und Definition von wichtigen Begriffen für die Beschreibung

Das Selektive Laserschmelzverfahren (SLM) oder Selektive Lasersinterverfahren (SLS) ist ein generatives Fertigungsverfahren. Bei dem Verfahren wird der zu verarbeitende Werkstoff in Pulverform in einer dünnen Schicht auf einer Substratplatte aufgebracht. Der pulverförmige Werkstoff (auch kurz "das Pulver") wird mittels elektromagnetischer Strahlung (insbesondere Laserstrahlung) lokal angeschmolzen (bei SLS) bzw. vollständig umgeschmolzen (bei SLM) und bildet nach der Erstarrung eine feste Materialschicht. Anschließend wird die Substratplatte um die Dicke einer Schicht abgesenkt und erneut Pulver aufgetragen. Dieser Zyklus wird solange widerholt, bis alle Schichten angeschmolzen bzw. umgeschmolzen sind. Der fertige Formkörper wird vom überschüssigen Pulver gereinigt und kann danach verwendet werden.

Mögliche pulverförmige Werkstoffe sind pulverförmige Metalle (Kupfer, Stahl, Kobalt-Chrom, Titan, Wolfram, Aluminium, Gold) und andere Stoffe (Glas, Keramik, Kunststoff).

Ein Vorteil des Verfahrens besteht darin, dass auch sehr harte Werkstoffe (Kobalt-Chrom, Titan) verarbeitet werden können, bei denen alternative Verfahren (z.B. Fräsen) wegen hohen Werkzeugverschleißes bei harten Werkstoffen wenig wirtschaftlich sind.

Eine Anlage für SLM oder SLS (im Folgenden "Anlage") beinhaltet als wichtige Komponenten eine Rechen- und Auswerteeinheit, eine Bestrahlungseinheit, eine Spiegelablenkeinheit und einen Beschichter.

Die Erfindung befasst sich insbesondere mit dem Beschichter bzw. einer entsprechenden Vorrichtung zum selektiven Laserschmelzen und/oder Lasersintern.

Die Aufgabe des Beschichters ist das Absenken der Substratplatte und daraufhin der gleichmäßige und ebene Auftrag einer neuen Pulverschicht.

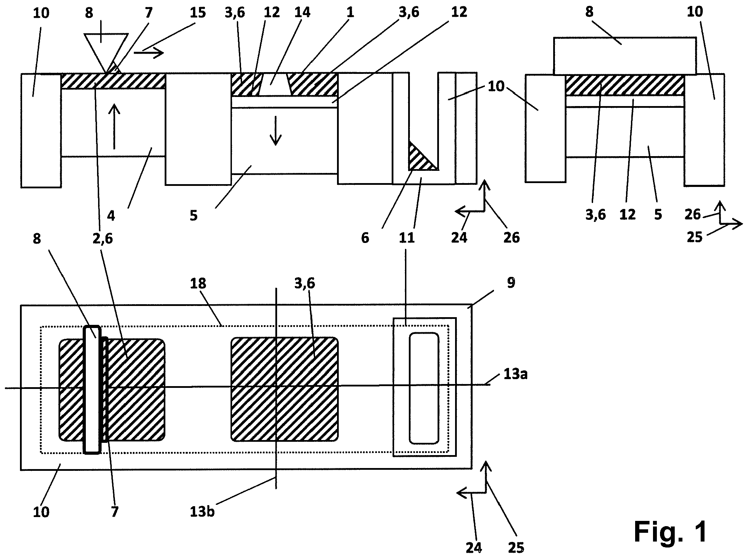

Ein solcher Beschichter gemäß dem Stand der Technik ist in Fig. 1 dargestellt.

In Fig. 1 wird eine Aufsicht auf den Beschichter gezeigt (unten links). In dieser Aufsicht sind zwei *Schnittebenen* (13a,b) dargestellt. Ferner ist in Fig. 1 oben links und oben rechts je ein Schnittbild zu sehen. Das Schnittbild oben links bezieht sich auf den Schnitt (13a) der Aufsicht. Das Schnittbild oben rechts bezieht sich auf den Schnitt (13b).

Der Beschichter weist einen *Bauraum* (3) und häufig einen *Vorratsraum* (3) auf. In der Aufsicht ist die Bauraum-Grundfläche bzw. die Vorratsraum-Grundfläche zu sehen.

Der Bauraum und ggf. der Vorratsraum haben immer senkrechte Wände. Als "Bauraum Grundfläche" bzw. "Vorratsraum-Grundfläche" wird die Projektion des Bauraums in die X-Y-Ebene verstanden, die "*Höhe des Bauraums"* bzw. "*Höhe des Vorratsraums"* ist deren Ausdehnung in Z Richtung. Die maximale Höhe eines herstellbaren Formkörpers ist durch die Höhe des Bauraums abzüglich der Dicke der Substratplatte gegeben.

Der Bauraum und ggf. Vorratsraum sind seitlich durch eine *Trennwand, Querwände* und *Längswände* begrenzt. Die Trennwand, die Querwände und die Längswände bilden einen starren Rahmen, der als "*Grundrahmen*" (10) bezeichnet wird.

Der Pulverauftrag erfolgt durch den Auftrag einer Pulverschicht aus dem *pulverförmigen Werkstoff* (6) (im Folgenden auch als "*Pulver*" bezeichnet) in den Bauraum.

Der Bauvorgang eines Formkörpers verläuft in mehreren Zyklen. In jedem Zyklus erfolgt der Auftrag einer *Pulverschicht* (1) aus dem *Pulver* (6) im Bauraum. Bei diesem Vorgang wird bei jeder Schicht der *Bodenblock des Bauraums* (5) abgesenkt. Häufig wird entsprechend auch der *Bodenblock des Vorratsraumes* (4) angehoben. Das Absenken und Anheben geschieht üblicherweise mit Linearverstellern, welche üblicherweise unterhalb der Böden des Bauraums bzw. des Vorratsraums angebracht sind.

Der Auftrag der Pulverschicht erfolgt mit Hilfe einer *Rakel* (8), welche bei der *primären Bewegung der Rakel* (15) zum Bauraum eine *Pulveransammlung* (7) für die nächste Schicht vor sich herschiebt und im Bauraum ablagert. Neben der primären Bewegung der Rakel gibt es noch eine *sekundäre Bewegung der Rakel,* die dazu dient, die Rakel wieder in die Ausgangsposition zurückzufahren.

Bei anderen Beschichtern nach dem Stand der Technik wird nicht der Bodenblock des Vorratsraumes angehoben, sondern es wird eine Pulvermenge aus einer Dosierschnecke abgegeben. Das Pulver fällt auf eine Sammelebene, wird dort von der Rakel erfasst und im Bauraum abgelagert.

Der Vorgang wird im Folgenden als "Pulvertransfer" oder "Transfer" bezeichnet. Er bezieht sich auf genau einen Zyklus und eine Pulverschicht.

Beim Vorgang des Rakelns können geringe Mengen an Pulver überschüssig sein. Sie werden mit der Rakel in ein *Pulverüberlaufgefäß* (11) verbracht. Nach Überstreichen des Pulverüberlaufgefäßes kehrt die Rakel um und fährt zurück an den Zyklus-Startpunkt jenseits des Vorratsraums oder jenseits der Zone, aus der Pulver von den Dosierschnecken herabfällt.

Die Unterkante der Rakel überstreicht bei jedem Zyklus eine Fläche, die als "Fahrbereichsfläche" (18) bezeichnet wird.

Das Aufschmelzen findet in der *obersten Pulverschicht* (1) des Bauraums statt. Unterhalb dieser befinden sich *ein oder mehrere bereits teilweise gebaute und in Pulver eingebettete Formkörper* (14) auf der *Substratplatte* (12).

Nachdem der Formkörper oder die Formkörper fertiggestellt sind, werden diese an der Substratplatte mit den Formkörpern aus dem Bauraum entnommen. Die Größe des Bauraums ist ausschlaggebend für die maximale mögliche Größe der Formkörper.

Danach wird der Formkörper von der Substratplatte getrennt. Außerdem wird das verbleibende lose Pulver aus dem Bauraum entfernt. Dieses verbleibende Pulver ist durch Spritzer des vormals flüssigen Materials mit größeren Partikeln verunreinigt.

Das Pulver wird üblicherweise entweder einem Wiederverwertungsbetrieb zugeführt, wobei wieder feines Pulver hergestellt wird, oder es wird ausgesiebt.

Im Fall des Aussiebens kann die durch die Siebe fallende feine Pulverkomponente unter Sauerstoffausschluss gelagert und bei einem späteren Bauvorgang wiederverwendet werden. Nur die ausgesiebten größeren Pulverpartikel werden dem Wiederverwertungsbetrieb zugeführt.

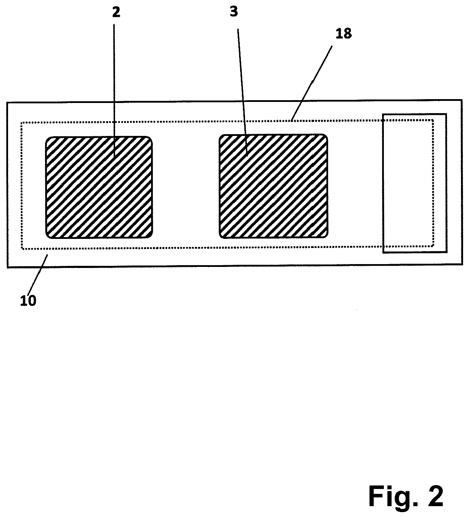

Fig. 2 zeigt eine stark vereinfachte Darstellung, die die Basis für die weiteren Erläuterungen sein wird: Es wird nur der Grundrahmen (10), der Bauraum (3), der Vorratsraum (2), die Fahrbereichsfläche (18) und der Ausschnitt für das Pulverüberlaufgefäß gezeigt.

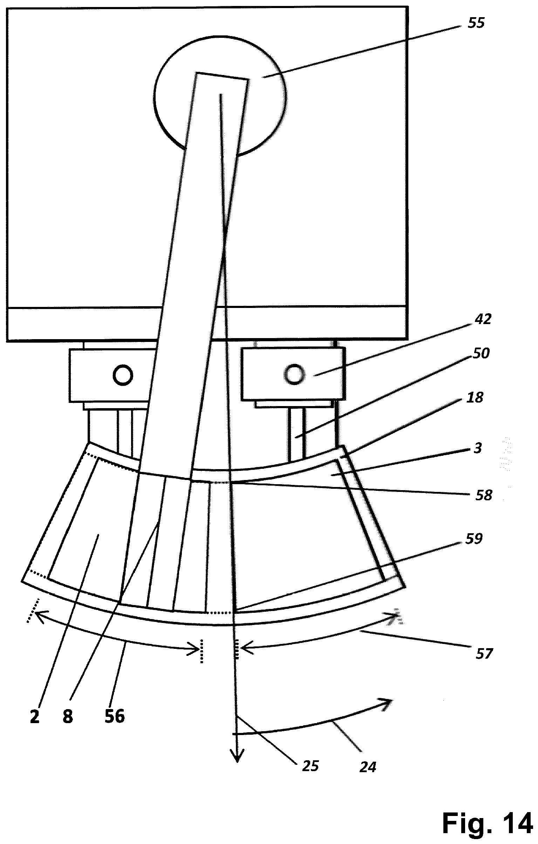

Als *X-Dimension,* auch als "*Länge*" (Ziffer 24 in Fig. 1), wird die Raumrichtung parallel zur Vorschubrichtung der Rakel bezeichnet. Jedoch sind die Überlegungen nicht auf eine linear bewegte Rakel beschränkt. Im Falle einer kreisförmig bewegten Rakel erhält X den Charakter eines (azimutalen) Winkels (Ziffer 24 in Fig. 14). Alle Überlegungen sind auch auf eine kreisförmig bewegte Rakel übertragbar.

Als *Y-Dimension*, auch als "*Breite*" (Ziffer 25 in Fig. 1), wird die waagrechte Abmessung senkrecht zur Vorschubrichtung bezeichnet. Im Falle einer Kreisbewegung der Rakel ist Y die radiale Koordinate (Ziffer 25 in Fig. 14).

Als *Z-Dimension (Höhe)* (26) wird die senkrechte Richtung bezeichnet.

### Aufgabe der vorliegenden Erfindung

Ziel der Erfindung ist die Anpassung der Form der Bauraum-Grundfläche eines Beschichters für SLS oder SLM an das oder die zu bauenden Teile.

Gleichzeitig soll bei einer Anpassung der Bauraum-Grundfläche die Höhe des Bauraums nicht oder nur in sehr geringem Umfang beeinträchtigt werden, damit die Fertigungsmöglichkeiten in der Höhe nicht oder nur in sehr geringem Umfang eingeschränkt werden.

Die Anpassung der Form der Bauraum-Grundfläche hat folgende Vorteile:
- Die Menge des für einen Bauprozess benötigten Pulvers des verbleibenden losen Pulvers im Bauraum wird reduziert. Dies führt
   - bei teuren Werkstoffen zu einer Reduzierung der Kapitalbindung in Form von Werkstoffpulver. Ein Beispiel ist der Werkstoff Gold.
   - zu einem geringeren Umlauf von Pulver, welches in vielen Fällen zu einem Wiederverwertungsbetrieb zurückgesandt wird und wieder neu erworben werden muss, Dadurch ergibt sich eine Kosteneinsparung.
   - zu geringerem Lagerbestand von Pulver, dies führt zu geringeren Lagerkosten und geringerem Risiko im Falle des Diebstahls von teurem gelagerten Pulver
   - zu einem reduzierten Arbeitsaufwand bei der Entnahme des Formkörpers und beim Aussieben, weil weniger loses Pulver im Bauraum verbleibt und von dort entfernt und ausgesiebt werden muss.
- Es ergeben sich Kosteneinsparungen bei den Substratplatten, weil Substratplatten kleinerer Fläche verwendet werden können.
- Die Geschwindigkeit des Bauprozesses erhöht sich bei einigen Konfigurationen.

Ein Zahlenbeispiel zur Quantifizierung der Effekte erfolgt am Ende der Beschreibung.

Die Aufgabe der vorliegenden Erfindung besteht daher darin, die Nachteile des Standes der Technik zu vermeiden, und eine Vorrichtung der eingangs genannten Art derart weiterzubilden, dass beim Prozess des selektiven Laserschmelzens und/oder Lasersinterns Pulver eingespart werden kann und die Einsatzmöglichkeiten der Vorrichtung erhöht werden.

### Zusammenfassung der Erfindung

Die Lösung dieser Aufgabe erfolgt bei einer Vorrichtung der eingangs genannten Art dadurch, dass in einer ersten Konfiguration das wenigstens eine Passstück vertikal relativ zu dem Grundkörper bewegbar ist und in einer zweiten Konfiguration das wenigstens eine Passstück mit dem Grundkörper fest verbunden, und vorzugsweise nicht bewegbar, ist. Ferner erfolgt die Lösung dieser Aufgabe durch eine entsprechende Verwendung eines derartigen Passstücks sowie ein entsprechendes Verfahren.

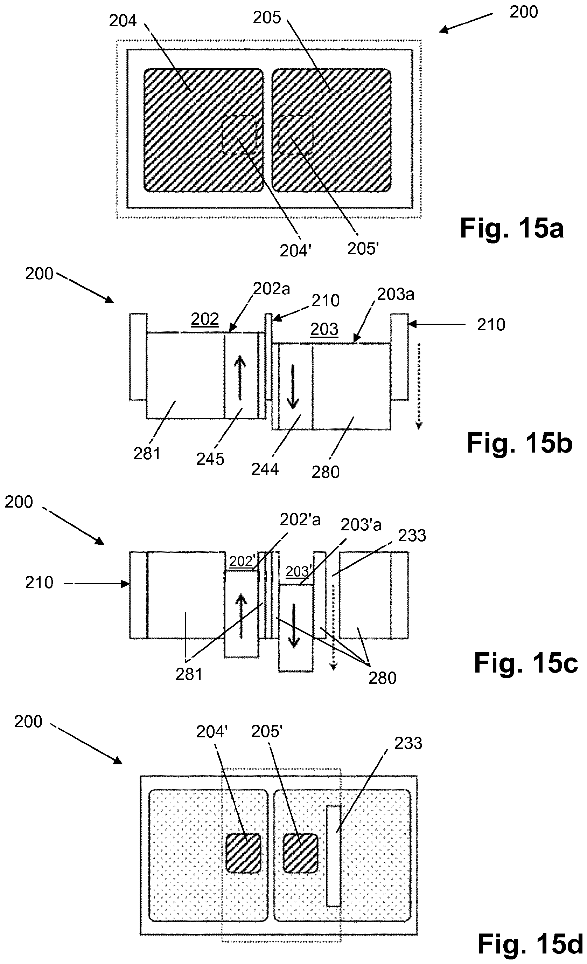

Der Raum ist dabei insbesondere der Bauraum oder der Vorratsraum für Pulver einer Vorrichtung zum selektiven Laserschmelzen und/oder Lasersintern. In der ersten Konfiguration ist das Passstück in der ersten Konfiguration bewegbar und vorzugsweise in der zweiten Konfiguration nicht bewegbar. In der ersten Konfiguration erfolgt vorzugsweise eine Befestigung des Passstücks an einem (Bau- und/oder Vorrats-)Raumbodenkern, und kann mit diesem mitbewegt werden. Wie nachfolgend (vgl. insbesondere das Ausführungsbeispiel nach Punkt I sowie nach Fig. 15a bis Fig. 15 b) näher erläutert wird, kann durch die wenigstens zwei Konfigurationen insbesondere eine Verkleinerung des Bauraums (und/oder des Vorratsraums für Pulver) erreicht werden, was auf einfache und kostengünstige Weise für eine Pulverersparnis sorgt. Der erforderliche Umbau zwischen den beiden Konfigurationen ist ebenfalls sehr einfach, da das wenigstens eine Passstück vorzugsweise lediglich anders befestigt werden muss. Dabei kann ein und dasselbe Passstück anders befestigt werden; denkbar ist aber auch, dass ein weiteres entsprechend aufgebautes Passstück in der jeweils anderen Konfiguration/Betriebsart verwendet bzw. befestigt wird. Besonders vorteilhaft ist auch, dass das Passstück in beiden Konfigurationen/Betriebsarten in der Vorrichtung verbaut ist. Das Passstück besitzt dabei in Bezug zu dem Raum (z.B. Bauraum oder Vorratsraum) eine Doppelfunktionalität. Die Erfindung wird bevorzugt für den Bauraum und den Vorratsraum verwendet, da bei einer Verkleinerung (oder Vergrößerung) des Bauraums eine entsprechende Verkleinerung (oder Vergrößerung) des Vorratsraums vorteilhaft ist. Sie kann aber auch beispielsweise nur für den Bauraum verwendet werden, z.B. wenn es keinen Vorratsraum gibt, d.h. falls etwa das Pulver über eine Dosierschnecke o.ä. bereitgestellt wird.

Ferner ist bevorzugt, dass eine in bestimmungsgemäßer Einbaulage obere Seite des wenigstens einen Passstücks in der ersten Konfiguration einen Boden des Raums bildet. Vorzugsweise bildet das Passstück genauer einen Teil des Bodens zusätzlich zu dem eigentlichen Boden des (Bau-)Raums, d.h. zu dem (Bau-)Raumbodenkern, und ist vorzugsweise an diesem befestigt. Durch den vertikalen Antrieb des Bodens, an welchem das Passstück in der ersten Konfiguration befestigt ist, wird in diesem Fall das Passstück mitbewegt und dient der Vergrößerung des Raums.

Vorteilhafterweise bildet eine in bestimmungsgemäßer Einbaulage seitliche Seite des wenigstens einen Passstücks in der zweiten Konfiguration eine seitliche Wand des Raums. In der zweiten Konfiguration ist das Passstück nicht mehr Teil des Bodens, sondern bildet eine (oder mehrere) Wände, z.B. Seitenwand, des (Bau-)raums und ist an dem Korpus bzw. Grundkörper der Vorrichtung fest verbunden. In der zweiten Konfiguration ist daher der Raum verkleinert.

Vorzugsweise ist in der zweiten Konfiguration der Boden des Raums vertikal relativ zu dem wenigstens einen Passstück bewegbar. Das wenigstens eine Passstück ist in dieser Konfiguration mit dem Grundkörper bzw. Grundrahmen fest verbunden.

Vorteilhafterweise ist der Raum der Bauraum, wobei das wenigstens eine Passstück einen in bestimmungsgemäßer Einbaulage in der zweiten Konfiguration vertikalen Spalt aufweist, welcher zur Abfuhr des überschüssigen Pulvers vorgesehen ist. Das Passstück hat in der zweiten Konfiguration in dieser Ausbildung eine Doppelfunktionalität; es dient als Wand z.B. des Bauraums und sorgt somit für dessen Verkleinerung und gleichzeitig sieht es eine Abführmöglichkeit für das Pulver vor, welche wesentlich näher am Bauraum vorgesehen sein kann. Auf diese Weise verringert sich der Weg, welchen die Rakel in einem Durchgang zurücklegen muss, wodurch sich die Herstellungszeiten enorm verringern.

Ferner ist bevorzugt, dass das wenigstens eine Passstück in der ersten Konfiguration keinen vertikalen Spalt aufweist. Der Spalt kann dabei in der ersten Konfiguration durch einen Deckel abgedeckt bzw. durch einen Verschluss verschlossen sein. Ebenfalls ist von der Erfindung umfasst, dass der vertikale Spalt durch eine Änderung der Orientierung des Passstücks in der ersten Konfiguration sozusagen "verschwindet", d.h. nicht mehr eine Öffnung auf der Oberfläche der Vorrichtung bildet. Eine weitere Möglichkeit besteht darin, dass der Spalt in dieser Konfiguration von der Substratplatte abgedeckt ist, wodurch er ebenfalls verschlossen ist.

Gemäß einer konstruktiv besonders vorteilhaften Ausführungsform der Erfindung weist die bestimmungsgemäße Einbaulage des wenigstens eine Passstück in der ersten Konfiguration eine andere Orientierung des wenigstens einen Passstücks als die Orientierung desselben in der bestimmungsgemäßen Einbaulage der zweiten Konfiguration auf. Hierdurch ergibt sich eine einfach Änderung zwischen den Konfigurationen mit Teileersparnis. Beispielsweise kann das Passstück so geformt sein, dass es sich in einer Lage am Bauraumbodenkern verklemmt, in einer umgedrehten Einbaulage am Grundkörper verklemmt und somit jeweils befestigt ist. Beispielsweise kann die Asymmetrie des Passstücks dabei so gering sein, das sie mit bloßem Auge nicht zu erkennen ist.

Vorteilhaft ist ferner, dass der Grundkörper die Wände des Raums in der ersten Konfiguration aufweist. In dieser Konfiguration ist ein großer Bauraum und/oder Vorratsraum vorgesehen.

Gemäß einer weiteren bevorzugten Ausführungsform bildet das wenigstens eine Passstück wenigstens eine Wand des Raums in der zweiten Konfiguration. Diese Wand dient zur Verkleinerung des Raums und bildet vorzugsweise mit weiteren Wänden des Grundkörpers einen in dieser Konfiguration einen verkleinerten Bauraum.

Vorteilhafterweise weist die Vorrichtung einen weiteren in bestimmungsgemäßer Einbaulage vertikalen Spalt auf, welcher in der ersten Konfiguration zur Abfuhr des überschüssigen Pulvers vorgesehen ist.

Vorzugsweise sind der erste und der weitere Spalt an der vom Vorratsbehälter oder von einer anders gearteten Zufuhrvorrichtung für das Pulver, wie z.B. einer Dosierschnecke, abgewandten Seite des Bauraums ausgebildet. Der Rakel bewegt sich dann in der ersten Konfiguration bis zu dem weiteren Spalt und in der zweiten Konfiguration bis nur bis zu dem in dem Passstück ausgebildeten Spalt, welcher z.B. wesentlich näher an dem Bauraum als der weitere Spalt angeordnet ist.

Vorteilhafterweise weist die Vorrichtung ferner einen Pulver-Auffangbehälter, welcher unter dem ersten und dem weiteren Spalt angeordnet ist, auf. Auf diese Weise kann ein einziger Pulver-Auffangbehälter für die Vorrichtung vorgesehen sein, welcher in beiden Konfigurationen/Betriebsarten zum Einsatz kommt, und zwar unabhängig davon, durch welchen Spalt das Pulver entfernt wird. Hierdurch wird der Aufbau der Vorrichtung vereinfacht und es ist kein weiterer Umbau bei der Umstellung zwischen den ersten und zweiten Konfiguration/Betriebsarten erforderlich, was insbesondere Zeit spart und Pulververluste minimiert. Weiterhin kann der einzige Pulverauffangbehälter auch störendes Pulver aufnehmen, welches beim Wechsel der Konfiguration infolge mangelnder Sauberkeit beim Arbeiten möglicherweise unter das Passstück gerät. Drittens kann der Pulverauffangbehälter auch in einem speziellen Reinigungsmodus der Anlage Pulver aufnehmen, in dem zum Zwecke der Reinigung nämlich sämtliche Passtücke entfernt werden und er Grundkörper und der dann vereinzelt stehende Bauraumboden-Kern mit einem Pinsel oder Ähnlichem gereinigt werden. Bei den Erläuterungen zu Punkt A werden noch weitere Arten aufgezählt, wie Pulver in den Auffangbehälter fällt, zum Beispiel durch fertigungsbedingte Spalten zwischen fixiertem Passstück und dem Grundkörper und dem Bauraumbodenkern.

Zum einfachen Umbau bzw. Umkonfigurieren der Vorrichtung zwischen den Konfiguration ist bevorzugt, dass der Boden des Bauraums in der ersten Konfiguration über den Grundkörper vertikal herausfahrbar ist. Dies erleichtert das Befestigen oder Anbringen bzw. das Entfernen des Passstücks an den bzw. von dem Bauraumboden. Die Vertikalbewegung bis zur Höhe des Grundkörpers ist zum Betrieb der Vorrichtung erforderlich; das über diese Höhe Hinausfahren, etwa über eine Distanz, welche den Abmessungen des Passstücks entspricht, ermöglicht den einfachen Umbau bzw. Umkonfiguration der Vorrichtung zwischen den beiden Konfigurationen.

Bei dem erfindungsgemäßen Verfahren zum selektiven Laserschmelzen und/oder Lasersintern sind folgende Schritte bevorzugt:
- Herstellen eines ersten Werkstücks in der ersten Konfiguration mittels Laserschmelzen und/oder Lasersintern;
- Umkonfigurieren oder Umbauen der Vorrichtung von der ersten Konfiguration in die zweite Konfiguration; und
- Herstellen eines zweiten Werkstücks in der zweiten Konfiguration mittels Laserschmelzen und/oder Lasersintern.

### Kurze Beschreibung der Zeichnungen

Weitere vorteilhafte Ausführungsformen der vorliegenden Erfindung gehen auch aus der folgenden detaillierten Beschreibung sowie aus den beigefügten Ansprüchen hervor. In den Zeichnungen bezeichnen dieselben oder ähnliche Bezugszeichen dieselben bzw. entsprechende Elemente. Dabei bilden alle beschriebenen und/oder bildlich dargestellten Merkmale für sich oder in beliebiger sinnvoller Kombination den Gegenstand der vorliegenden Erfindung, und zwar unabhängig von ihrer Zusammenfassung in den Ansprüchen oder deren Rückbeziehung. In den Zeichnungen zeigt:
Fig. 1 einen Beschichter nach dem Stand der Technik;
Fig. 2 einen Grundrahmen, Vorratsraum, Bauraum und Fahrbereichsfläche nach Stand der Technik;
Fig. 3 einen Grundrahmen, Vorratsraum, Bauräume, Bauraum-Passtücke entsprechend Punkt D;
Fig. 4 ein Ausführungsbeispiel der vorliegenden Erfindung zur Ausführungsform nach Punkt C;
Fig. 5 ein Ausführungsbeispiel der vorliegenden Erfindung für einen Bauraum entsprechend Punkt E;
Fig. 6 ein Ausführungsbeispiel der vorliegenden Erfindung für eine Bauraumeinheit entsprechend Punkt G und Punkt E;
Fig. 7 ein Ausführungsbeispiel der vorliegenden Erfindung für eine Bauraumeinheit entsprechend Punkt Fund Punkt E;
Fig. 8 ein Ausführungsbeispiel der vorliegenden Erfindung für eine Bauraumeinheit entsprechend Punkt I, Punkt H und Punkt E;
Fig. 9 ein Ausführungsbeispiel der vorliegenden Erfindung zur Ermittlung der angepassten Form;
Fig. 10 ein Ausführungsbeispiel der vorliegenden Erfindung für eine Pulverbedarfsfunktion;
Fig. 11 ein Ausführungsbeispiel der vorliegenden Erfindung Skalierung der Pulverversorgungsfunktion;
Fig. 12 ein Ausführungsbeispiel der vorliegenden Erfindung für einen Grundrahmen entsprechend Punkt L, Punkt D und Punkt C;
Fig. 13 eine schematische Darstellung einer Ausführungsform der Erfindung zur Erläuterung der Pulverversorgung bei Konfiguration der anderen Bauraum-Grundflächen;
Fig. 14 eine schematische Darstellung einer Ausführungsform der Erfindung zur Erläuterung zur Pulverversorgung auf eine kreisförmige Bewegung der Rakel; und
Fig. 15a bis 15d schematische Darstellungen eines Ausführungsbeispiels der vorliegenden Erfindung in einer Draufsicht in einer ersten Betriebsart/Konfiguration (Fig. 15a), einer Schnittansicht in einer ersten Betriebsart/Konfiguration (Fig. 15b), einer Schnittansicht in einer zweiten Betriebsart/Konfiguration (Fig. 15c), und einer weiteren Draufsicht in einer zweiten Betriebsart/Konfiguration (Fig. 15d).

### Detaillierte Beschreibung von bevorzugten Ausführungsbeispielen der Erfindung

### Anpassung der Bauraumgeometrie

**Punkt A der Zusammenfassung** (am Ende der Beschreibung) betrifft einen *Beschichter für SLM oder SLS,* bei welchem verschiedenen Bauraum-Grundflächen konfiguriert werden können.

Mit dem Begriff "konfigurieren" ist eine Umrüstung oder Umstellung der Anlage vor Beginn des Bauprozesses gemeint. Diese Umrüstung oder Umstellung kann manuell oder automatisch erfolgen.

Die Anzahl der konfigurierbaren Bauraum-Grundflächen wird mit der Variablen N bezeichnet. N ist größer oder gleich zwei.

Eine Möglichkeit einer automatischen Umstellung besteht darin, dass ein Beschichter beispielsweise motorisch verstellbare Wände des Bauraums aufweist. Durch motorisches Verstellen dieser Wände kann der Bauraum konfiguriert, also vergrößert oder verkleinert werden. Die motorische Verstellung erfolgt vor Beginn des Bauprozesses.

Eine andere Möglichkeit der Konfigurierung besteht darin, Bauraum-Passstücke zu verwenden. Ein Passstück ist ein zur Anlage mitgelieferter, starrer Körper einer bestimmten Form.

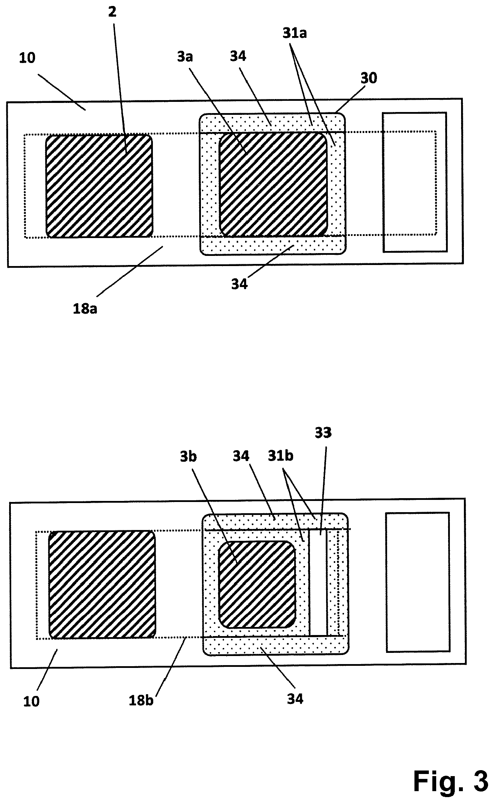

Der Grundrahmen weist einen Bauraumausschnitt (30) auf, welcher größer oder gleich dem durch die Wände des Bauraums definiertem Ausschnitt ist. In Fig. 3 wurden exemplarisch die erfindungsgemäßen Veränderungen bei Verwendung von Bauraum-Passtücken eingezeichnet.
- In der oberen Darstellung ist ein Bauraum-Passstück A (31a) dargestellt, dessen innere Wände den Bauraum 1 (3a) bilden.
- In der unteren Darstellung ist ein Bauraum-Passstück B (31b) dargestellt, dessen innere Wände den kleineren Bauraum 2 (3b) bilden.

Durch Einsetzen eines Bauraum-Passstücks wird dieser Bauraumausschnitt verkleinert. Das Bauraum-Passstück hat vorzugsweise einen inneren Ausschnitt, welcher vorzugsweise den Seitenwänden (dem Rand) eines Bauraums entspricht. Das Bauraum-Passstück berandet (bildet der Rand) den Bauraum ganz oder teilweise. Im Beispiel der Fig. 3 beranden die Bauraum Passtücke den Bauraum vollständig. Ein Beispiel für Bauraum-Passtücke, die den Bauraum nur teilweise beranden wird unter Punkt M gezeigt.

Zur Aufnahme der Bauraum-Passstücke dient eine Aussparung im Grundrahmen. Dieser wird als Bauraum-Ausschnitt bezeichnet.

Außerdem weist ein Bauraum-Passstück vorzugsweise einen Formschluss zum Bauraumausschnitt auf. Das Bauraum-Passstück steht in bestimmungsgemäßer Einbaulage relativ zum Bauraumausschnitt fest, wird also nicht mit dem Bodenblock des Bauraums mitbewegt.

Der Zustand der Fixierung relativ zum Bauraumausschnitt kann erreicht werden etwa durch Festschrauben am Grundrahmen, durch magnetische Befestigung, durch Aufsetzen auf Passstifte. Die Fixierung kann auch durch Zusammenstecken des Bauraum-Passstücks in den Bauraumausschnitt mit einem Formschluss oder durch das Gewicht des Bauraum-Passstücks erfolgen. Alternativ auch kann das Passtück indirekt, beispielsweise mit einem Linearversteller mit dem Grundrahmen verbunden sein, welcher nicht in Bewegung ist. Der Linearversteller kann beispielsweise in einer anderen Konfiguration so gesteuert sein, dass das Passstück keine Relativbewegung zum ebenfalls bewegten Bauraumbodenkern aufweist.

Damit der Beschichter funktionieren kann, darf am Bodenblock es Bauraums weder Pulver austreten noch der Bodenblock mit verkleinerten Bauraumwänden kollidieren. Das erscheint schwierig angesichts der Tatsache, dass der Bauraumausschnitt einerseits einen beweglichen Bodenblock aufweist, andererseits die Größe und Form der Wände des Bauraums nunmehr konfigurierbar ist, also wechseln kann.

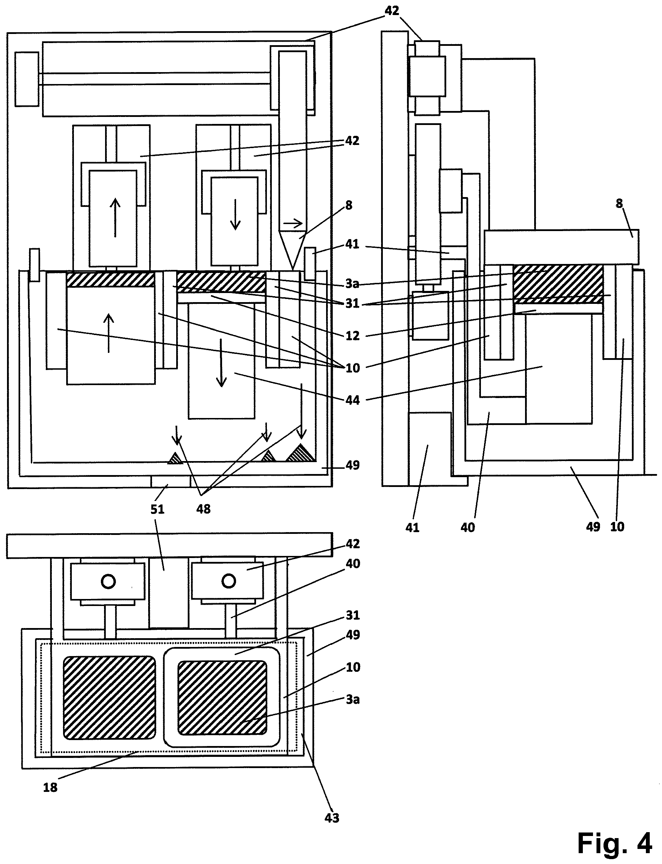

Einer der Möglichkeiten der Kollisionsvermeidung besteht darin, anstelle eines Objektes mit der Funktion eines Bodenblocks nur einen Bauraum-Bodenkern (Ziffer 44 in Fig. 4) mit einer reduzierten Grundfläche zu bewegen. Diese Grundfläche liegt innerhalb der Bauraum-Grundfläche (Ziffer 3a in Fig. 4) des kleinsten Bauraums. Wenn das der Fall ist, wird ein solcher Bauraum Bodenkern mit keinem Bauraum-Passstück in bestimmungsgemäßer Einbaulage kollidieren.

Allerdings wird dann bei einigen Konfigurationen (ausgenommen möglicherweise die Konfiguration mit dem kleinsten Bauraum) Pulver austreten, weil der Bodenblock nicht eng schließt.

Dieses Problem kann beispielsweise dadurch gelöst werden, dass die Dichtigkeit gegen den Pulveraustritt nicht durch den Bodenblock, sondern durch verschiedene Substratplatten (Ziffer 12 in Fig. 4) gewährleistet wird, deren Form der zugehörigen Bauraum-Grundfläche angepasst sind und sich mit einem sachgerechten Spaltmaß in zugehörigen Bauraum bewegen lassen.

Allerdings besteht auch bei einem sachgerechten Spaltmaß weiterhin ein Problem mit austretendem Pulver, z. B. wegen der Fertigungstoleranzen der beteiligten Bauteile oder den Toleranzen der Fixierung des Bauraum-Passstücks.

In der Ausführungsform nach **Punkt B der Zusammenfassung** wird dieses Problem gelöst. Es handelt es sich um einen *Beschichter nach Punkt A, bei dem durch Spalten eines konfigurierten Bauraums herabfallendes Pulver in einem Pulverauffanggefäß gesammelt wird.*

Erfindungsgemäß befindet sich ein Pulverauffanggefäß unterhalb des Bauraums, in welches Pulver, welches durch die Ritze dringt hineinfällt. Dieses Pulverauffanggefäß kann vorzugsweise leicht entnommen werden, insbesondere ohne dass das Bauraum-Passstück entfernt werden muss.

Ein zusätzliches Merkmal ist die Einführung eines absichtlichen Spalts in einem Bauraum-Passstück zwischen dem Bauraum und dem Pulverauffanggefäß. Dieses erstreckt sich über die gesamte Breite des Bauraums. Es dient als Pulverfalle und ersetzt somit das Pulverauffanggefäß in dieser Konfiguration. Der Spalt muss hinreichend groß sein, damit alles Pulver durch ihn in das Pulverauffanggefäß fällt.

Ein Beispiel für einen absichtlichen Spalt ist in Fig. 3 dargestellt. Dort hat der absichtliche Spalt die Ziffer 33. Bei Verwendung eines absichtlichen Spalts kann die Fahrbereichsfläche (18a bzw. 18b) reduziert werden. Die primäre Bewegung der Rakel kann nämlich bereits nach Überstreichen des absichtlichen Spalts und nicht erst nach Überstreichen des Pulverüberlaufgefäßes umgedreht werden, um an den Zyklus-Startpunkt zurückzufahren. Dadurch reduziert sich der Fahrweg und bei angenommener konstanter Fahrgeschwindigkeit die Fahrzeit der Rakel. Die Fahrzeit der Rakel ist ein Bestandteil des Zeitbedarfs für den Bauprozess, der somit vorteilhaft insgesamt beschleunigt wird. Um den Effekt zu steigern, sollte ein verkleinerter Bauraum möglichst nicht zentriert im der Mitte des größeren Vorratsraum angeordnet werden, sondern möglichst nahe zum Vorratsraum hin. Auch der zwischen Bauraum und Pulverüberlaufgefäß befindliche Spalt sollte möglichst nahe zum Bauraum hin angeordnet werden.
Ein weiteres Ausführungsbeispiel wird unter Punkt C gezeigt.

Die Ausführungsform nach Punkt B ist vorteilhaft, weil erst diese eine Ausführung mit Passtücken erlaubt. Auch der absichtliche Spalt ist vorteilhaft, weil er bei kleinen Bauräumen eine erhebliche Zeiteinsparung ermöglicht.

Die Ausführungsform nach **Punkt C** beschreibt einen
*Beschichter nach Punkt B, bei dem es sich bei dem Pulverauffanggefäß um das einzige aktive Pulverauffanggefäß am Beschichter handelt.*

Ein Beispiel zu dieser Ausführungsform ist in Fig. 4 dargestellt. Die Darstellungsrichtungen und Schnitte entsprechen der Darstellung von Fig. 1. Hier ist ein relativ großes Pulverauffanggefäß (49) mit dem im Beschichter notwendigen Pulverüberlaufgefäß (11 in Fig. 1) kombiniert; es handelt sich um dasselbe Gefäß. Das Auffanggefäß befindet sich unterhalb der Außenkanten des Grundrahmens und hat, um das herabfallende Pulver aufzunehmen, eine Breite, welche über die Breite des Grundrahmens hinausgeht. Dadurch entsteht eine Pulverfalle (43), in die das überschüssige Pulver gerakelt wird.

Pulver welches sich nach dem Überstreichen des Bauraums (3) noch auf der Rakel (8) befindet, fällt durch die Pulverfalle (43) in das Pulverauffanggefäß. Die *Linearversteller und die zugehörigen Motoren* (42) zur Bewegung des Bodenblocks des Bauraums sind vorzugsweise nicht unterhalb des Bodenblocks, sondern seitlich neben den Grundrahmen verlegt; die Motorkräfte werden mit Hilfe geeigneter Winkelkonstruktionen (40) auf den Bodenblock des Bauraums übertragen. Dadurch sind alle Bauteile unterhalb des Bodenblocks unempfindlich gegen herabfallendes Pulver (48), welches aus der Spalte zwischen dem Bauraum-Passstück (31) und der Substratplatte (12) oder aus der Spalte zwischen dem Bauraumausschnitt (30) und dem Bauraum-Passstück herabfallen könnte. Weiterhin ist der Weg des herabfallenden Pulvers nicht durch Motoren, Getriebe oder Kabel gestört, so dass das Pulver sich dort nicht ablagern kann. Das Pulverauffanggefäß ist leicht zu entnehmen. Es gibt im Beispiel der Fig. 4 eine Aufhängekonstruktion (41) zum Herausnehmen des Pulverauffanggefäßes nach einem Bauprozess. Der Vorgang ist sogar einfacher als bei einem Pulverüberlaufgefäß (11) gemäß Fig. 1. Auch ist der Beschichter insgesamt leicht von Pulver zu reinigen, da der Grundrahmen zum Reinigen zugänglich ist.

Eine Anlage kann mit mehreren Pulverauffanggefäßen ausgeliefert werden, von denen jedoch immer nur eines aktiv ist. Die anderen Pulverauffanggefäße könnten z.B. zur Lagerung von Pulver aus dem vorhergehenden Bauprozess dienen und in einem Unterschrank eingehängt werden.

Im Übrigen gilt die am gleichen Tage der Anmeldung dieser Erfindung vom gleichen Anmelder eingereichte Beschreibung zur Erfindung "Beschichter für Selektives Lasersintern oder Selektives Laserschmelzen" als vollumfänglich in dieser Beschreibung enthalten.

Die Ausführungsform nach Punkt D beschreibt einen
*Beschichter nach einem oder mehreren der Punkte A-C,*
- *welcher einen Bauraumausschnitt aufweist, dessen Grundfläche größer als die des größten Bauraums ist und*
- *bei dem die Konfiguration durch Bauraum-Passstücke erfolgt, welche in bestimmungsgemäßer Einbaulage relativ zum Grundrahmen des Beschichters fest stehen.*

Wie in Fig. 3 dargestellt und bereits erläutert, gibt es für jeden Bauraum (3a, 3b) mindestens ein Bauraum-Passstück (31a, 31b). Im Beispiel von Fig. 3 ist die Anzahl der konfigurierbaren Bauräume N gleich 2 und es gibt zwei Bauraum-Passtücke.

Vorteilhaft an dieser Ausführungsform ist, dass die Befestigung der Passtücke am Grundrahmen in Be*reichen* (Ziffer 34 in Fig. 3) *außerhalb des Fahrbereichs der Rakel* erfolgen kann. Dadurch ergibt sich die Möglichkeit der Befestigung auch mit nach oben stehenden Befestigungsmitteln, z.B. Druckknöpfen, Zylinderkopfschrauben. Ebenso können Befestigungsmittel verwendet werden, welche nicht mit Pulver verschmutzt werden sollen, weil z.B. bei Eindringen von Pulver sich die Lage des Bauraum-Passstücks verändern würde.

Eine andere (in Fig. 3 nicht dargestellte) Ausführungsform der Befestigung besteht in einer "verketteten Befestigung". Hier passt das Bauraum-Passstück 2 mit Formschluss in das Bauraum Passstück 1. Bauraum-Passstück 1 würde nicht entfernt, sondern dient als Verbindung zwischen dem Grundrahmen und dem Bauraum-Passstück 2.

Der Ausführungsform nach **Punkt E** beschreibt einen
*Beschichter nach einem oder mehreren der Punkte A-C,*
- *bei dem die Konfiguration durch Bauraum-Passtücke erfolgt, welche in bestimmungsgemäßer Einbaulage relativ zum Grundrahmen des Beschichters fest stehen*
- *bei dem zur Konfiguration des größten Bauraums kein Passstück eingesetzt wird*

In dieser Ausführungsform gibt es N Bauräume und vorzugsweise N-1 Bauraum-Passtücke. Der Bauraumausschnitt ist identisch zum größten Bauraum, welcher als Bauraum Nr. 1 bezeichnet wird.

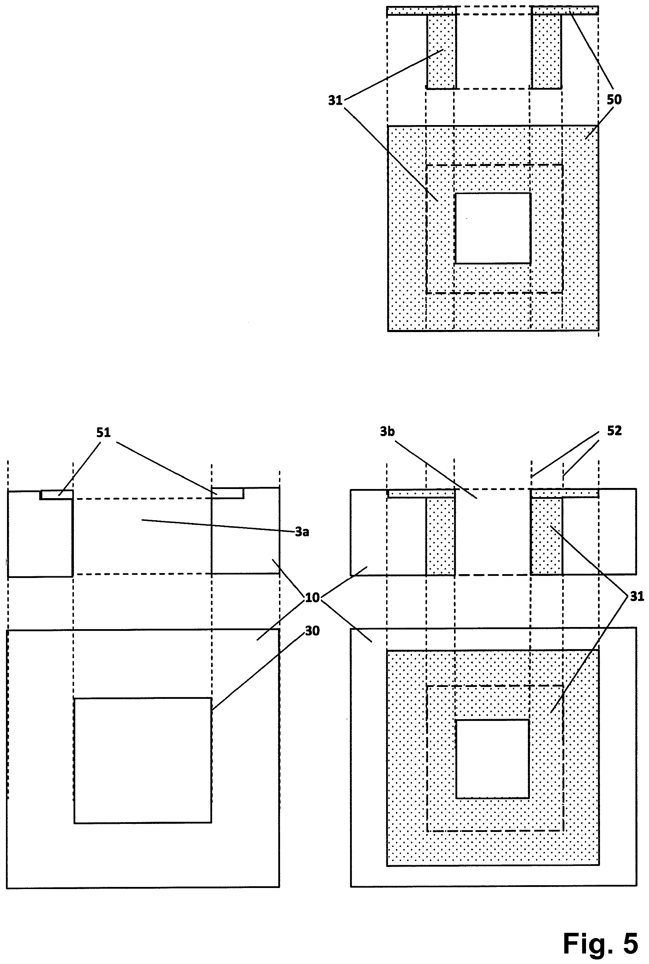

Ein beispielhafter Bauraum hierzu ist in Fig. 5 dargestellt. Hier ist N=2, es gibt also nur ein Bauraum-Passstück (31), welches rechts oben in Seitenansicht und gleich darunter in Aufsicht dargestellt ist. Die *Linien* (52) dienen zur Verdeutlichung der Durchzeichnung zwischen Seitenansicht und Aufsicht.

Links unten ist der Bauraumausschnitt (30) zu sehen, welcher in diesem Fall selbst einen Bauraum (3a) bildet. Dieser Bauraum wird willkürlich als Bauraum Nummer 1 bezeichnet.

Rechts unten ist zu sehen, wie das Bauraum-Passstück (31) mit Formschluss in den Bauraumausschnitt (30) eingebracht wird und am Grundrahmen (10) befestigt ist. Auf diese Weise entsteht der Bauraum 2 (3b).

Im Beispiel der Fig. 5 erfolgt die Befestigung mit einem Formschluss, welcher das Bauraum Passstück aber zunächst nicht vor einer senkrechten Bewegung abhält. Zusätzlich ist ein *Halter gegen Abrutschen* (50) *des Bauraum-Passstücks* ein Bestandteil des Bauraum-Passstücks, mit dessen Hilfe der Formschluss vervollständigt wird.

Die Fixierung erfolgt beispielsweise durch Schwerkraft, durch Verklemmung oder durch Senkkopf Schrauben, welche von oben durch den Halter (50) in den Grundrahmen geschraubt werden.

Dieser Halter (50) benötigt eine Aussparung am Grundrahmen. Ein Kompensationsteil (51) füllt diese Aussparung bei nicht eingesetztem Bauraum-Passstück.

Nun kommen wir zu den Möglichkeiten, die Dichtigkeit gegen austretendes Pulver herzustellen:
Infolge der **Überlegung nach Punkt F** entsteht ein
*Beschichter nach einem oder mehreren der Punkte A-E,*
   - *wobei der Beschichter einen Bodenblock aufweist, welcher mit dem größten Bauraum eine eng schließende Bauraumeinheit bildet und*
   - *je ein auf den Bodenblock aufgesetztes Bauraumboden-Passstück mit einem der verbleibenden Bauräume eine eng schließende Bauraumeinheit bildet.*

Von nun an diskutieren wir Passstücke, welche an unterschiedlichem Ort befestigt sind:
- am Grundrahmen oder
- am Bauraumboden.
Die beiden Passstück-Gruppen gleiten gegeneinander.

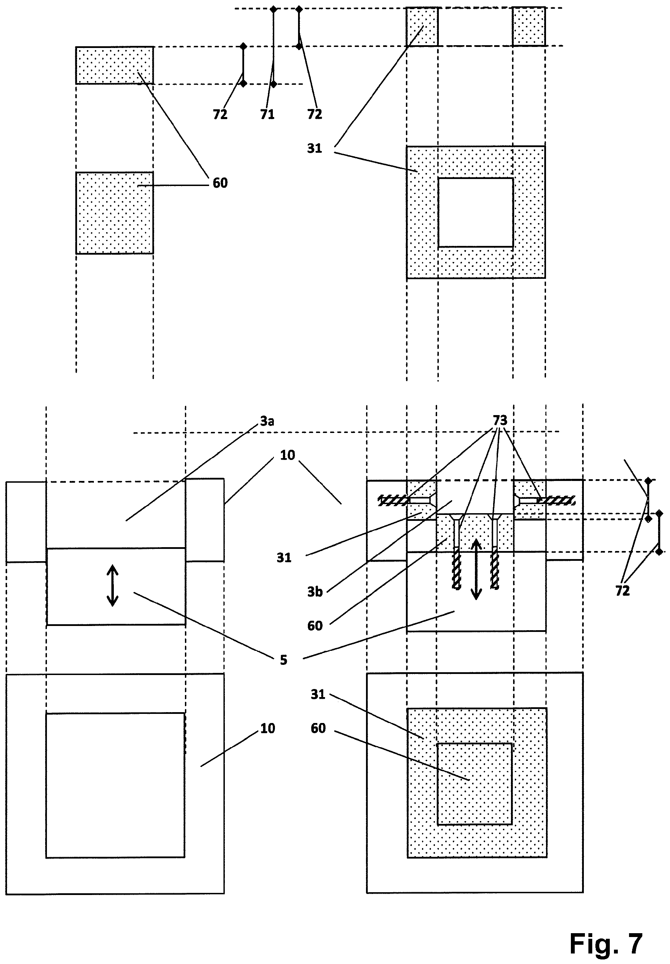

Der Beschichter weist nach dieser Überlegung einen Bodenblock (Ziffer 5 in Fig. 7) auf, welcher für den größten Bauraum (Bauraum Nr. 1) ausgelegt ist.

Mit dem Begriff "*eng schließende Bauraumeinheit"* wird ein Bauraum und ein dazu passender Bodenkonstruktion eines Bauraums bezeichnet. Diese bilden nur dann eine *eng schließende Bauraumeinheit,* wenn ihre Form zueinander passt, d. h. die Bodenkonstruktion des Bauraums muss mit einem sachgerechten Spaltmaß im Bauraum nach oben und unten gleiten.

Ein Beispiel für eine Bauraumeinheit entsprechend Punkt F und Punkt E ist in Fig. 7 dargestellt. Im Beispiel ist N=2; es gibt ein Bauraumboden-Passstück und ein Bauraum-Passstück. Das Bauraum-Passstück (31) ist rechts oben dargestellt. Das *Bauraumboden-Passstück* (60) ist links oben dargestellt.

Unten links ist die *eng schließende Bauraumeinheit* 1 dargestellt. Im Beispiel der Fig. 7 wird Bauraum 1 (3a) nach Punkt E alleine durch den Bauraumausschnitt (30) gebildet. Der Beschichter ist ohne jedes Passstück betriebsbereit in der Konfiguration der Bauraumeinheit 1.

Unten rechts ist die *eng schließende Bauraumeinheit* 2 dargestellt. Bauraum 2 (3b) wird durch das Bauraum-Passstück 1 (31) gebildet, welches am Grundrahmen (10) befestigt ist. Der Bodenkörper des Bauraums 2 wird hier durch den Bodenblock (5) und das Bauraumboden-Passstück 1 (60) gebildet.

Die Passstücke sind im Beispiel jeweils mit Schraubverbindungen (73) am Grundrahmen bzw. am Bodenblock befestigt.

Diese Konfiguration ist ungewöhnlich. Es wäre nämlich eine Kollision während des Bauprozesses des (großen) Bodenblocks des Bauraums 1 mit dem Bauraum-Passstück 1 zu erwarten, welches den Bauraum reduziert.

Eine Kollision des Bodenblocks (5) mit einem Bauraum-Passstück (31) während des Bauprozesses kann durch eine besondere Maßnahme vermieden werden:
Die Höhe der Bauraum-Passstücke und die Höhe des Bauraumboden-Passstücke ergeben in Summe die Höhe des Bauraums, vorzugsweise indem jedes der Passtücke die halbe Höhe des Bauraums aufweist. Der Bodenblock wird beim Bauprozess nur im vertikalen Intervall zwischen dem unteren Ende des Bauraums 1 und der Unterkante der Bauraum-Passstücke bewegt. Dadurch reduziert sich die Höhe der Bauräume Nr. 2 bis N auf maximal die Hälfte der Höhe des Bauraums 1. Dieser maximale Fall wird genau dann erreicht, wenn die Höhe der Passtücke jeweils ebenfalls die Hälfte der Höhe des Bauraums 1 beträgt.

Im Beispiel gibt es zwei Bauraume. Die Höhe des Bauraums 1 ist mit der Ziffer 71 dargestellt; die halbe Höhe mit der Ziffer 72.

In dieser Überlegung gibt es keinen Bauraumboden-Kern wie unter Punkt A beschrieben. Die Reduzierung der Höhe der verkleinerten Bauräume ist nachteilig. Dieser Beschichter steht im Gegensatz zu der eingangs postulierten Anforderung, nachdem sich die Höhe des Bauraums nicht reduzieren soll.

**Die Ausführungsform nach Punkt G** beschreibt einen
*Beschichter nach einem oder mehreren der Punkte A-E, wobei*
- *der Beschichter einen Bauraum-Bodenkern aufweist und*
- *verschiedene Formen des Bodenblocks des Bauraums durch Bauraumboden-Passstücke konfiguriert werden können welche in bestimmungsgemäßer Einbaulage relativ zum Bauraum Bodenkern fest stehen.*

Nach dieser Ausführungsform werden dem Bauraum angepasste Bodenblöcke des Bauraums gebildet. Dabei wird der Bauraum-Bodenkern mit *Bauraumboden-Passtücken* jeweils zu einem Bodenblock ergänzt.
Ausführungsbeispiele werden unter Punkt H und I gezeigt.

In einer Variante dieser Ausführungsform wird ein dem Bauraum angepasster Bodenblock gebildet, wobei der Bauraum-Bodenkern mit N *Bauraumboden-Passtücken* jeweils zu N Bodenblöcken des Bauraums ergänzt werden. Zu jedem der N Bodenblöcke des Bauraums gibt es einen zugehörigen Bauraum.

Die **Ausführungsform nach Punkt H** beschreibt einen
*Beschichter nach Punkt G,*
- *bei dem der Bauraum-Bodenkern mit dem kleinsten Bauraum eine eng schließende Bauraumeinheit bildet.*

In dieser Ausführungsform gibt es N Bauräume und mindestens N-1 Bauraumboden-Passtücke.

Der Bauraum-Bodenkern selbst bildet den Bodenblock des kleinsten Bauraums. Wir bezeichnen diesen Bauraum als Bauraum Nr. N. Jedes Bauraumboden-Passstück bildet mit dem Bauraum Bodenkern und einem der verbleibenden Bauräume (also nicht dem kleinsten) eine eng schließende Bauraumeinheit.

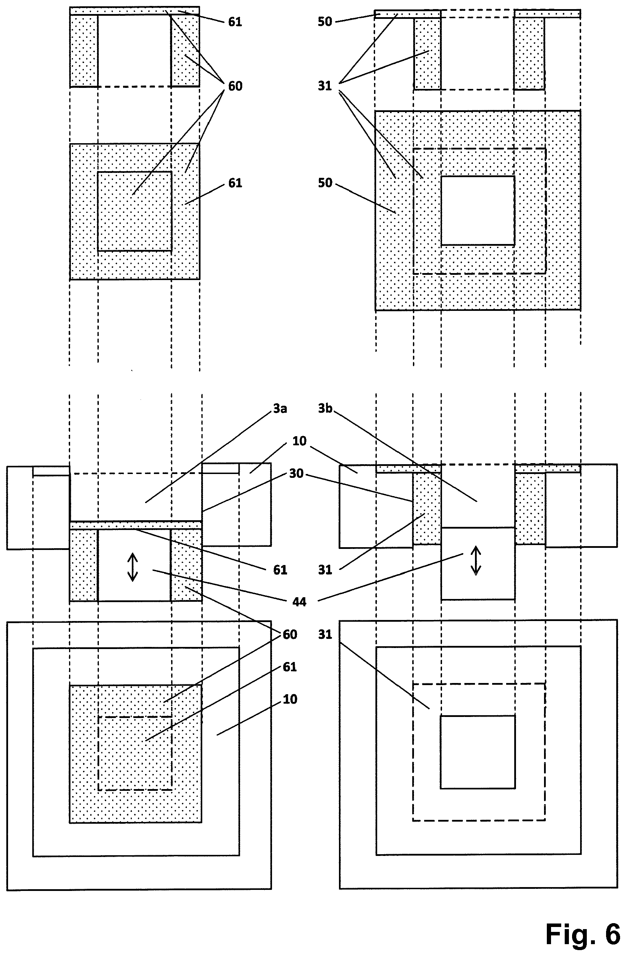

Ein Beispiel für eine Bauraumeinheit entsprechend Punkt G und Punkt E ist in Fig. 6 dargestellt. Hier ist N=2, es gibt also nur ein Bauraum-Passstück (31), welches links oben dargestellt ist und nur ein *Bauraumboden-Passstück* (60), welches rechts oben dargestellt ist.

Unten links ist die *eng schließende Bauraumeinheit* 1 dargestellt. Bauraum 1 (3a) wird alleine durch den Bauraumausschnitt (30) gebildet, weil es sich in diesem Beispiel um eine von Punkt E abhängige Ausführungsform handelt. Der Bodenblock (3a) des Bauraums 1 wird gebildet durch den Bauraum Bodenkern (44) in Kombination mit dem am Bauraum-Bodenkern befestigten Bauraumboden Passstück (60)

Unten rechts ist die *eng schließende Bauraumeinheit* 2 dargestellt. Bauraum 2 (3b) wird durch das Bauraum-Passstück (31) gebildet, welches am Grundrahmen (10) befestigt ist. Der Bodenblock (3b) des Bauraums 2 wird hier alleine durch den Bauraum-Bodenkern (44) gebildet.

In der Fig. 6 erfolgt nicht nur die Befestigung des Bauraum-Passstücks, sondern auch die des Bauraumboden-Passstücks mit einem Formschluss: Es ist zusätzlich auch ein *Halter gegen Abrutschen* (61) als Bestandteil des *Bauraumboden-Passstücks* vorgesehen. Dadurch wird der Formschluss vervollständigt.

Die Fixierung erfolgt wiederum beispielsweise durch Schwerkraft, durch Verklemmung oder durch Senkkopf-Schrauben, welche von oben durch die Halter (50) oder (61) in den Grundrahmen bzw. den Bauraum-Bodenkern geschraubt werden.

Die Dicke des Halters gegen Abrutschen des Bauraumboden-Passstücks kann beim Bauprozess dadurch kompensiert werden, dass der Bauraum-Bodenkern bei jedem Schritt um ein Stück tiefer gesetzt wird. Der Höhe dieses Versatzes entspricht die Dicke des Halters.

Die **Ausführungsform nach Punkt I** ist ein
*Beschichter nach Punkt G oder H,*
*wobei es sich bei mindestens einem der Bauraum-Passstücke und einem der Bauraumboden Passstücke um dasselbe Teil handelt.*

In dieser besonders bevorzugen Ausführungsform der vorliegenden Erfindung dient mindestens eines der Passstücke in einer Konfiguration als Bauraum-Passstück und in einer anderen Konfiguration als Bauraumboden-Passstück. Ein solches Passstück wird als "Doppelfunktionspa*ssstück*" bezeichnet.

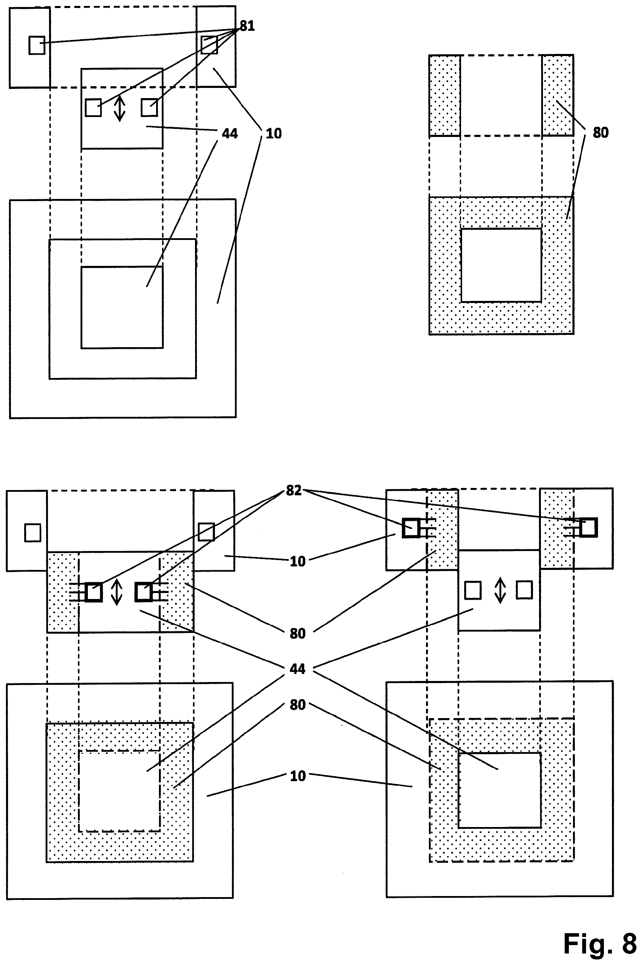

In Fig. 8 wird ein Beispiel für eine Bauraumeinheit entsprechend Punkt I, Punkt H und Punkt E mit N = 2 gegeben.
Oben links ist ein *Doppelfunktionspassstück* (80) dargestellt. Es dient in Konfiguration 1, welche unten links dargestellt ist, als Bauraumboden-Passstück. Außerdem dient dasselbe Passstück in Konfiguration 2, welche unten rechts dargestellt ist, als Bauraum-Passstück.
Ein Doppelfunktionspassstück wird in einer Konfiguration fest relativ zum Grundrahmen fixiert und in einer anderen Konfiguration fest relativ zum Bauraum-Bodenkern.

Zur Befestigung eines Doppelfunktionspassstücks kommen die im Folgenden beschriebenen Möglichkeiten in Frage:

### A Befestigung von der Seite

Zur Befestigung des Doppelfunktionspassstücks am Bauraum-Bodenkern oder an weiteren mit dem Bauraum-Bodenkern verbundenen Doppelfunktions-Passtücken wird der Bauraum-Bodenkern vorzugsweise über die Oberfläche des Grundrahmens hinaus-gefahren, wozu vorzugsweise ein nach oben verlängerter Z-Fahrweg dient. Der Bodenblock ist dann von der Seite frei zugänglich. Zur Befestigung deines Doppelfunktionspassstücks am Grundrahmen oder an weiteren mit dem Grundrahmen verbundenen Doppelfunktionspasstücken andererseits wird der Bodenblock vorzugsweise zum unteren Anschlag gefahren, damit die Innenseite der Wände des Grundrahmens frei zugänglich ist. Damit kann die seitliche Befestigung erfolgen:
A1 Die seitliche Befestigung kann beispielsweise mit Senkschrauben geschehen. Dazu müssen im Doppelfunktionspassstück, im Bauraum-Bodenkern und in den Wänden des Grundrahmens passende Bohrungen oder Gewinde vorgesehen sein.
A2 Eine schneller zu bedienende Möglichkeit ist in Fig. 8 dargestellt. Sie besteht darin, das Doppelfunktions-Passstück ganz oder teilweise aus einem ferromagnetischen Material, z. B. Eisen, zu fertigen. Zusätzlich wird im Grundrahmen (10) und im Bauraum-Bodenkern (44) ein schaltbarer Elektromagnet integriert. Ein aktiver Elektromagnet mit Stromfluss ist der Ziffer 82 dargestellt; ein nicht-aktiver Elektromagnet ohne Stromfluss mit der Ziffer 81. Wird der Elektromagnet im Grundrahmen aktiv geschaltet, so haftet das Doppelfunktionspassstück am Grundrahmen. (Fig. 8 unten links) Wird hingegen der Elektromagnet im Bauraum-Bodenkern aktiv geschaltet, so haftet das Doppelfunktionspassstück am Bauraum-Bodenkern. (Fig. 8 unten rechts)

### B Befestigung durch Drehung des Passstücks

Das Bauraum-Passstück aus Fig. 8 ist quadratisch und kann auch um 90°, 180° und 270° gedreht eingesetzt werden. Diese Verdrehung kann zur Befestigung hin zum Grundrahmen oder hin zum Bauraum-Bodenkern genutzt werden, z. B. indem in der Mitte von zwei gegenüberliegenden Wänden des Doppelfunktionspassstücks Zylinder aus einem ferromagnetischen Material, z. B. Eisen, eingesetzt werden. Die Zylinder reichen von der Außenseite des Doppelfunktionspassstücks bis zu seiner Innenseite. Zusätzlich werden zwei gegenüberliegende Wände des Grundrahmens jeweils in der Mitte der Wand mit Festmagneten ausgestattet. Weiterhin erhalten auch zwei gegenüberliegende Wände des Bodenkerns Festmagneten, wobei bei einer rechteckigen Geometrie diejenigen Wände gewählt werden, die zu den mit Scheiben versehenen Wänden des Grundrahmens um 90° versetzt sind. Ein Doppelfunktionspassstück wird dann, je nachdem mit welcher 90° Verdrehung es eingesetzt wird, durch Magnetkräfte entweder relativ zum Grundrahmen oder relativ zum Bodenköper fixiert.

Bei der der **Ausführungsform nach Punkt J** handelt es sich um einen
*Beschichter nach einem oder mehreren der Punkte A-I,*
*wobei mindestens eine der Bauraum-Grundflächen der Geometrie eines Formkörpers von bestimmender Größe angepasst ist.*

Bei einer *"angepassten Form"* handelt es sich um eine komplexe Form, also weder um ein Rechteck noch um ein Rechteck mit abgerundeten Ecken noch um eine Kreisform.

*Als "Grundfläche eines Formkörpers" wird die Projektion des Formkörpers auf die X-Y-Ebene bezeichnet.*

Beispielsweise könnte ein Hersteller von Armbanduhrengehäusen die Form der Bauraum Grundfläche an die Grundfläche des Uhrengehäuses anpassen.

Im Folgenden wird ein Weg aufgezeigt, wie man eine solche Anpassung vornehmen kann:
Zunächst benötigt man die Grundfläche des Formkörpers. Diese wird vorzugsweise seinen CAD-Daten entnommen.
Ein anderer Weg zur Ermittlung der Grundfläche des Formkörpers besteht darin, den Formkörper physisch zu beschaffen, ihn auf Papier zu legen, dessen Umriss auf das Papier zu zeichnen und so die Grundfläche zu erhalten.
Wenn Formkörperbereiche einen hohen Abstand von dem Papier haben, kann die Grundfläche auch durch Abzeichnung des Schattenwurfs, mit Hilfe einer senkrecht über dem Objekt stehenden, weit entfernten Lichtquelle ermittelt werden.

Danach ermittelt man die Außenränder der angepassten Form: Diese entstehen vorzugsweise, indem man diese Abzeichnung von außen mit Linien oder Bogenstücken umgibt, welche aneinander anschließen. Dabei soll die entstehende Form vorzugsweise konvex sein. Abgesehen von der etwaigen Überbrückung von konkaven Bereichen sollen die Abstände der Linien oder Bogenstücke von der Abzeichnung vorzugsweise an keiner Stelle mehr als 25 % des Umkreisdurchmessers der Form der Grundfläche des Formkörpers betragen.
Dies geschieht, um zu den ursprünglichen Formteilen ähnliche andere Formteile mit Hilfe des gleichen Bauraum-Passstücks fertigen zu können.
Somit ist die angepasste Form ermittelt. Entsprechend dieser angepassten Form wird die Bauraum Grundfläche gestaltet.

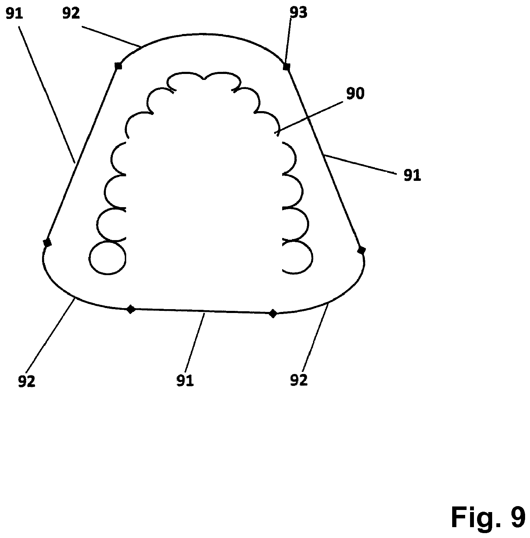

In Fig. 9 wird als Beispiel die Ermittlung der Grundfläche der angepassten Form aus einem dentalen Kiefermodells gezeigt. Die Grundfläche eines dentalen Kiefermodells umschließt die größten im Dentalbereich vorkommenden Formkörper und ist deswegen bei SLS- oder SLM-Anlagen im Dentalbereich geeignet zur Definition des größten Bauraums.

Um eine dem menschlichen Kiefer angepasste Form zu ermitteln, geht man wie beschrieben vor: Ein Kiefermodell wird auf Papier gelegt. Die Außenform des Zahnbogens (90) wird umfahren. Die Außenränder der angepassten Form entstehen, indem man diese Abzeichnung von außen mit Linien (91) oder Bogenstücken (92) umgibt, welche verbunden sind. Die Übergänge zwischen Linien und Bogenstücken sind in der Fig. zur Verdeutlichung mit Rauten (93) versehen. Abgesehen von den konkaven Bereichen der Abzeichnung betragen die Abstände der Linien oder Bogenstücke von der Umrisszeichnung vorzugsweise an keiner Stelle mehr als 25% des Umkreisdurchmessers der Abzeichnung

### Versorgung mit Pulver

Im Folgenden befassen wir uns mit der Zuführung von Pulver an den konfigurierbaren Bauraum. Es ist das Ziel der Erfindung, die Menge des für einen Bauprozess benötigten Pulvers zu reduzieren. Also sollte ein Bauraum beim Transferprozess nicht mit mehr Pulver als notwendig versorgt werden, weil dieses Pulver nur im Pulverüberlaufgefäß landen würde und den Pulverumlauf nachteilig erhöht.

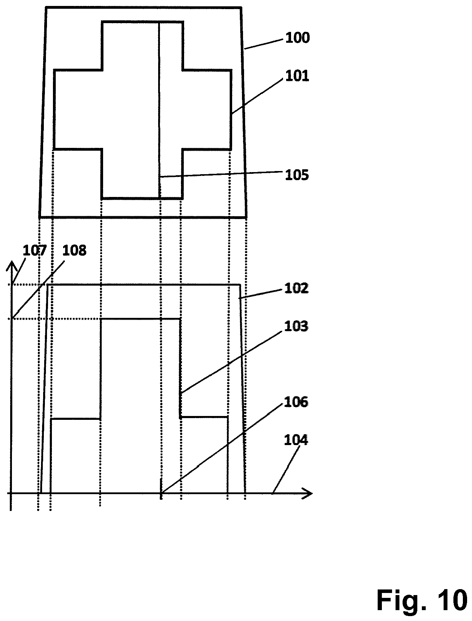

Wir betrachten als Beispiele ein Trapez (100) als Bauraum-Grundfläche 1 und eine Kreuzform als Bauraum-Grundfläche 2 (Fig. 10).

Das Pulver wird mit einer Rakel in diese Trapezform bzw. Kreuzform bei etwas abgesenktem Bodenblock des Bauraums eingerakelt, indem die Rakel eine akkumulierte Pulveranhäufung in X Richtung vor sich herschiebt.

Im Beispiel solle es einen Vorratsraum geben, der entsprechend der Trapezform (100) gestaltet ist. Wenn der Bauraum in der gleichen Trapezform konfiguriert ist, entspricht die Versorgung mit Pulver dem Bedarf. Im Folgenden wird die Vorgehensweise erläutert, wenn aber der Bauraum in einer anderen Form, z.B. in der Kreuzform konfiguriert ist.

Im Allgemeinen bezeichnen wir den Funktionsverlauf in Y-Richtung für die Pulvermenge, die notwendig ist, um eine bestimmte Bauraum-Grundfläche exakt mit Pulver zu füllen als Pulverbedarfsfunktion P(Y). Das Integral über Y der Funktion P(Y) gibt das benötigte Pulvervolumen an; es entspricht dem Produkt aus dem Flächeninhalt der Bauraum-Grundfläche mit dem Vorschub des Bauraum-Bodenblocks dz_{B}. Die Pulverbedarfsfunktion P(Y) selbst berechnet sich als Länge der Ausdehnung des Bauraums in X-Richtung, multipliziert mit der Schichtdicke dz_{B}. Die Länge der Ausdehnung in X-Richtung wird bei einem bestimmten Wert der Y-Koordinate (also längs der entsprechenden Linie mit konstantem Y-Wert) gemessen.

Als Beispiel ist die *Länge* (105) *des Bauraums 2 am Ort Y₀* (106) in Fig. 10 eingezeichnet. Auch ist die *Pulverbedarfsfunktion der Bauraum-Grundfläche 1* (100) mit der Ziffer 102 dargestellt, in einem *Koordinatensystem* (104) bei dem die Y-Achse nach rechts und die Pulverbedarfsfunktion nach oben weist. Die *Pulverbedarfsfunktion zu der Bauraum-Grundfläche 2* (101) ist mit der Ziffer 103 bezeichnet.

Die Pulverbedarfsfunktion (103) der Bauraum-Grundfläche 2 ist, soweit sie von Null verschieden ist, stets kleiner als die Pulverbedarfsfunktion (102) der Bauraum-Grundfläche 1. Das muss so sein, denn die Bauraum-Grundfläche 2 (101) liegt überall innerhalb der Bauraum-Grundfläche 1 (100); also ist ihre Länge in x-Richtung an jedem Ort Y kleiner als die Länge der Bauraum-Grundfläche 1.

Um einen Bauraum mit nicht zu viel und nicht zu wenig Pulver zu versorgen, ist der Pulverbedarf P(Y) mit der Pulverversorgungsfunktion Q(Y) gleichzusetzen. Die Pulverversorgungsfunktion Q(Y) kann interpretiert werden als jene Pulvermenge, welche die Rakel am Ort Y der Rakelkante vor sich herschiebt.

Nun muss die Aufgabe gelöst werden, eine der Funktion P(Y) entsprechende Pulverversorgungsfunktion Q(Y) auf der Rakel zu schaffen, oder wenigstens eine Pulverversorgungsfunktion, die der Funktion P(Y) nahekommt.

Wenn die Pulverversorgungsfunktion Q(Y) die Pulverbedarfsfunktion an einem Ort Y übersteigt, wird das überschüssige Pulver in das Pulverüberlaufgefäß abgerakelt. Wenn aber die Pulverbedarfsfunktion die Pulverversorgungsfunktion an einem Ort Y übersteigt, so fehlt das Pulver in der entsprechenden Schicht und der Bauprozess wird fehlerhaft. Also darf die Pulverversorgungsfunktion die Pulverbedarfsfunktion an keiner Stelle unterschreiten. Ein Überschreiten ist relativ unproblematisch aber nicht erwünscht, um nicht zu viel Pulver ins Pulverüberlaufgefäß zu rakeln.

Das **nach Punkt K zusammengefasste Verfahren** besteht in der
*Skalierung der Pulverversorgung je nach Bauraum,*
*anzuwenden bei einem Beschichter nach einem oder mehreren der Punkte A-J.*

Ein Weg zur Schaffung einer angenäherten Pulverversorgungsfunktion besteht darin, die Pulverversorgung bei einem Beschichter zu skalieren:
Üblicherweise weist ein Beschichter einen Hardware-Parameter auf, der die Pulverversorgungsfunktion multiplikativ verändert.

Hierzu zwei Beispiele:
- Wenn die Pulveranhäufung über das Ausrakeln aus einem Versorgungsraum entsteht, so kann der Vorschub dzᵥ des Bodenblocks des Vorratsraumes angepasst werden.
- Im Falle der Pulverversorgung mit einer Dosierungsschnecke erfolgt die Skalierung der Pulverversorgung durch Änderung der Winkelverstellung der Dosierungsschnecke pro Zyklus.

Die Skalierung erfolgt für jede Bauraum-Grundfläche getrennt.

Eine multiplikative Veränderung mit einem Skalierungsfaktor ist jeweils so vorzunehmen, dass die Pulverversorgungsfunktion möglichst klein ist, aber die Pulverbedarfsfunktion an keiner Stelle unterschreitet.

Der Skalierungsfaktor kann berechnet werden, indem die Funktionen Q(y) und P(y) an einer großen Anzahl von Stützstellen yᵢ; tabelliert werden. Es werden auch die Quotienten P(yᵢ)/Q(yᵢ) mit tabelliert, und zwar nur an allen Orten yᵢ; an denen Q(yᵢ) ungleich Null ist. Der Maximalwert dieser Quotienten ist der gesuchte Skalierungsfaktor s. Die skalierte Pulverversorgungsfunktion ist dann s*Q(y).

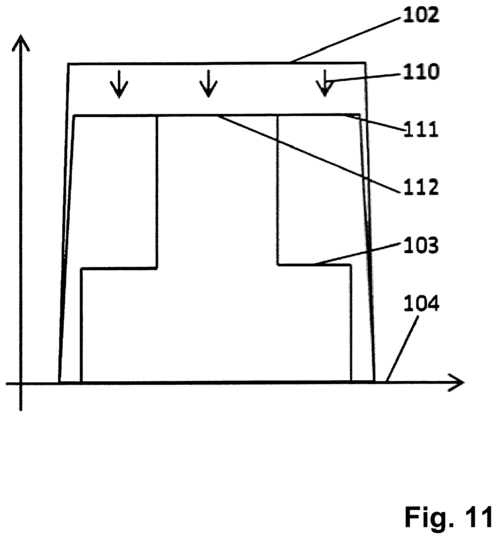

In Fig. 11 ist ein Beispiel für Skalierung gezeigt. In diesem Beispiel hat der Vorratsraum ebenfalls die Form des Bauraums 1, ist also trapezförmig. Die Pulverversorgungsfunktion Q(y) und die Pulverbedarfsfunktion P₁(y) sind für den Bauraum 1 gleich; hier ist der bestmögliche Zustand bereits erreicht. Die Pulverversorgungsfunktion ist mit der Nummer (102) in Fig. 11 dargestellt.

Für den Bauraum 2 erfolgt im Beispiel nun die Skalierung der Pulverversorgungsfunktion Q(y) (102) auf die Pulverbedarfsfunktion (103) durch Multiplikation von Q(y) mit einem Faktor s, so dass P₂(y) zwar erreicht, aber nie unterschritten wird. Die Funktionswerte Q(yᵢ) und P₂(yi) werden tabelliert. Diese sind im Bereich des Mittelplateaus (112) maximal, weil dort P₂(y) relativ groß ist. Der Quotient aus den Abszissenwerten im Bereich des Mittelplateaus P₂ (108) und Q₁ (107) hat in diesem Beispiel einen Wert von 0,8, der Skalierungsfaktor s erhält somit diesen Wert.

Der Vorschub des Bodenblocks des Vorratsraums dz_{y} wird im Verglich zum Vorschub für Bauraum 1 um den Faktor s = 0.8 reduziert. Diese Maßnahme ergibt eine skalierte Pulverversorgungsfunktion s*Q(y), welche mit dem Bezeichner (111) dargestellt ist. Die proportionale Herunterskalierung der Funktion (102) in die *skalierte Pulverversorgungsfunktion* (111) wird symbolisch mit *proportionalen Skalierungsfeilen* (110) zum Ausdruck gebracht.

Eine im Vergleich zur Skalierung noch genauere Anpassung der Form der Pulverversorgungsfunktion an die Pulverbedarfsfunktion kann durch andere, weitergehende Maßnahmen erreicht werden:
Beim Einsatz einer Dosierschnecke für die Pulverversorgung besteht ein Weg zur Schaffung einer angenäherten Pulverversorgungsfunktion darin, den Austritt der Dosierschnecke in Y-Richtung gesteuert zu bewegen. In Bereichen mit hohem Funktionswert der Pulverbedarfsfunktion verbleibt der Pulveraustritt der Dosierschnecke länger als in Bereichen mit niedrigem Funktionswert der Pulverbedarfsfunktion.

Ein anderer Weg, nämlich die **Ausführungsform nach Punkt L** besteht in einem
*Beschichter nach einem oder mehreren der Punkte A-J, bei dem verschiedene Vorratsraum Grundflächen konfiguriert werden können.*

Analog zur Vorgehensweise beim Bauraum können in dieser Ausführungsform verschiedene Vorratsraum-Grundflächen konfiguriert werden, um eine beabsichtigte Pulverversorgungsfunktion zu erreichen.

In einer Variante sind die Bauraum-Grundflächen und die Versorgungsraum-Grundflächen dabei gleich, ebenso sind die Vorschübe dzᵥ und dz_{B}. Das hat vorteilhaft zur Konsequenz, dass die Pulverversorgungsfunktion gleich der Pulverbedarfsfunktion ist. In anderen Varianten erfolgt eine Skalierung und die Vorschübe werden entsprechend Punkt M angepasst.

Die Überlegungen zur Konfiguration des Bauraums gemäß Punkt A-J sind auf die Konfiguration des Vorratsraums übertragbar. Insbesondere
- *kann, analog zu Punkt B, aus Spalten des Vorratsraumes herabfallendes Pulver mit einem Pulverauffanggefäß aufgefangen werden,*
- *kann, analog zu Punkt B, dieses Pulverauffanggefäß das einzige Pulverauffanggefäß am Beschichter sein,*
- *kann, analog zu Punkt D oder E die Konfiguration durch Vorratsraum-Passtücke erfolgen,*
- *können, analog zu Punkt G, verschiedene Formen des Vorratsraumbodenblocks durch an einem Vorratsraum-Bodenkern befestigte Vorratsraumboden-Passstücke konfiguriert werden,*
- *kann, analog zu Punkt I, es sich bei mindestens einem der Vorratsraum-Passstücke und einem der Vorratsraumboden-Passstücke um dasselbe Teil handeln.*

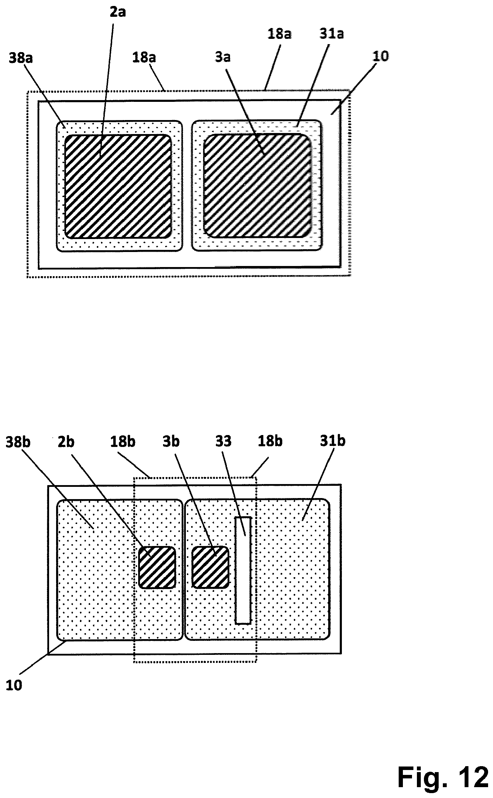

Ein Beispiel ist in Fig. 12 gezeigt. In der oberen Bildhälfte ist der Bauraum 1 (31a) und der Vorratsraum 1 (2a) mit Hilfe des Vorratsraum-Passstücks 1 (38a) konfiguriert, in der unteren Bildhälfte dagegen ist der Bauraum 2 (31b) und der Vorratsraum 2 (2b) mit Hilfe des Vorratsraum Passstücks 2 (38b) konfiguriert.

Ein verkleinerter Vorratsraum sollte möglichst nicht zentriert in der Mitte des größeren Vorratsraums angeordnet werden, sondern möglichst nahe zum Bauraum hin. Das hat den Vorteil, dass der Zyklus Startpunkt der Rakel weiter zum Bauraum hin verlegt werden kann und somit die Fahrbereichsfläche (18a bzw. 18b) weiter reduziert wird. Dadurch reduziert sich der Fahrweg und bei angenommener konstanter Fahrgeschwindigkeit die Fahrzeit der Rakel, so dass der Bauprozess vorteilhaft insgesamt schneller wird.

Ein Beschichter mit konfigurierbarem Vorratsraum kann unter Umständen vereinfacht werden. Das ist dann der Fall, wenn, **wie in Punkt M zusammengefasst**, bei einem *Beschichter nach einem oder mehreren der Punkte A-J oder L, die Pulverbedarfsfunktionen von mindestens zwei Bauraums Grundflächen im Verhältnis zueinander konstant sind.*

Immer wenn die Pulverbedarfsfunktionen von mindestens zwei Bauraum-Grundflächen im Verhältnis zueinander konstant sind kann eine der Konfigurationen der Vorratsraum-Grundfläche eingespart werden.

Falls nämlich die Pulverbedarfsfunktionen von zwei Bauraum-Grundflächen im Verhältnis zueinander konstant sind, ist es ausreichend, wenn nur eine der beiden Bauraum-Grundflächen als entsprechende Vorratsraum-Grundfläche realisiert wird.

Die Pulverversorgung bei Konfiguration der anderen Bauraum-Grundflächen kann mit Hilfe der gleichen Vorratsraum-Grundfläche durch Skalierung des Vorschubs dzy im Verhältnis der beiden Pulverbedarfsfunktionen gewonnen werden.

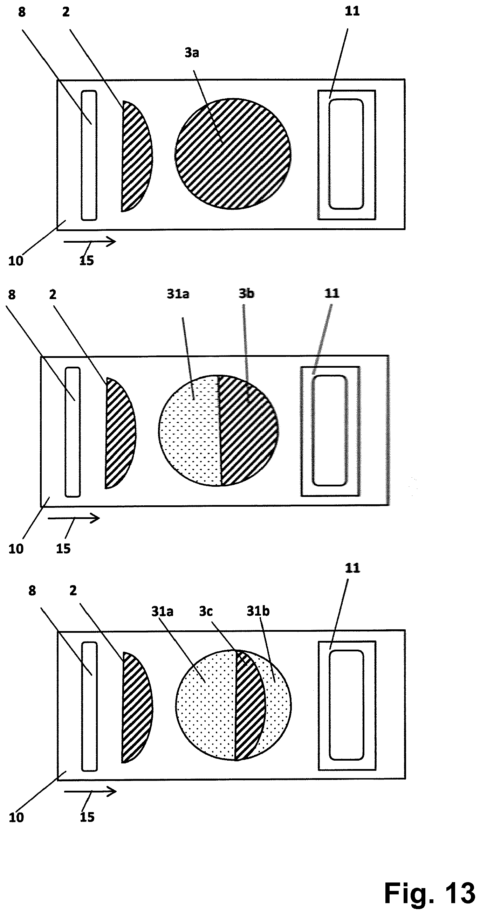

Ein Ausführungsbeispiel ist in Fig. 13 dargestellt:
- Die Bauraum-Grundfläche 1 (3a) ist kreisförmig,
- Die Bauraum-Grundfläche 2 (3b) ergibt sich aus der Bauraum Grundfläche 1 durch Halbierung des Kreises mit einem Schnitt in Y-Richtung. Die Pulverbedarfsfunktion der Bauraum Grundfläche 2 ist halb so groß wie die von Bauraum-Grundfläche 1. Die Konfigurierung geschieht mit Hilfe eines halbkreisförmigen Passstücks 1.
- Die Bauraum-Grundfläche3 (3c) ergibt sich aus der Bauraum Grundfläche 2 durch lineare Stauchung in X-Richtung mit dem Faktor 0.5. Die Pulverbedarfsfunktion von Bauraum Grundfläche 2 ist also ein viertel so groß wie die von Bauraum-Grundfläche 1. Die Konfigurierung geschieht mit einem sichelförmigen Bauraum-Passstück 2 (31 b) zusätzlich zu Bauraum-Passstück 1.

Also sind alle drei Pulverbedarfsfunktionen in ihrem Verhältnis zueinander konstant. Entsprechend fallen zwei Konfigurationen für die Vorratsraum-Grundfläche weg. Die Zahl der Vorratsraum Grundflächen reduziert sich von 3 auf 1.

Damit ist vorteilhaft kein Vorratsraum-Passstück notwendig. Es reicht bereits eine Vorratsraum Geometrie aus. Die im Beispiel realisierte Vorratsraum-Grundfläche entspricht der Bauraum Grundfläche drei. Die Konfiguration 2 zur Bauraum-Grundfläche 2 wird mit einer Verdoppelung des Vorschubs dzᵥ betrieben, die Konfiguration 1 zur Bauraum-Grundfläche 1 wird mit einer Vervierfachung des Vorschubs dzᵥ.

### Übertragung der Überlegungen zur Pulverversorgung auf eine kreisförmige Bewegung der Rakel

Die Überlegungen sind auch im Falle einer kreisförmigen Bewegung der Rakel anstelle einer Linearbewegung anwendbar. Wir übertragen dann die Überlegungen in ein nicht-kartesisches Koordinatensystem, dessen Ursprung der Mittelpunkt der Rakelbewegung ist. Wir definieren eine X Koordinate als azimutale Winkelkoordinate in diesem Koordinatensystem, eine Y-Koordinate als entsprechende radiale Koordinate. Die Z-Koordinate bleibt unverändert die senkrechte Richtung. Die Pulverversorgung findet dann längs kreissektor-förmiger Bogenstücke statt anstelle von Linien. Entsprechend müssen die Weglängen X im Bauraum zur Pulverabgabe und die im Vorratsraum zur Pulveraufnahme als Winkel am Mittelpunkt der Drehbewegung gemessen werden.

Ein Beispiel ist in Fig. 14 dargestellt. Die X-Koordinate ist die Winkelkoordinate (24), gemessen am Mittelpunkt der Drehbewegung. Die Y-Koordinate ist die radiale Koordinate (25), gemessen ebenfalls vom Mittelpunkt der Drehbewegung. Der Dreh-Versteller ist mit der Ziffer 55 eingezeichnet. Der Bauraum hat eine Winkelausdehnung X₁ (57), der Vorratsraum hat eine Winkelausdehnung X₂ (58). Im Beispiel sind beide Winkelausdehnungen gleich groß, die Vorschübe dZ_{V} und dZ_{B} ebenfalls gleich groß, so dass die Pulverversorgungsfunktion Q(Y) und die Pulverbedarfsfunktion P(Y) gleich sind. Beide Funktionen sind Rechtecksfunktionen, welche zwischen den Radius-Werten Y₁ (58) und Y₂ (59) einen konstanten, von Null verschieden Wert aufweisen, nämlich das Produkt aus der Winkelausdehnung X₁ und dem Vorschub dzᵥ.

Anhand der Fig. 15a bis 15d wird im Folgenden ein weiteres bevorzugtes Ausführungsbeispiel der vorliegenden Erfindung näher erläutert. In der Draufsicht der Fig. 15a erkennt man die erfindungsgemäße Vorrichtung 200 mit dem Grundrahmen bzw. Grundkörper 210, dem Vorratsraumbodenblock 204 und dem Bauraumbodenblock 205 gemäß einer ersten Konfiguration/Betriebsart. In der Figur ist gestrichtelt der Vorratsraumbodenblock 204' und dem Bauraumbodenblock 205' gemäß einer zweiten Konfiguration/Betriebsart eingezeichnet (vgl. hierzu auch die Fig. 1 und 2).
In Fig. 15b ist in einer Längsschnittansicht der Betrieb der Vorrichtung 100 angedeutet, nämlich eine Vertikalbewegung des Vorratsraumbodenblock 204 nach oben und eine Vertikalbewegung des Bauraumbodenblock 205 nach unten. Der Vorratsraum ist mit dem Bezugszeichen 202 und der Bauraum mit 203 bezeichnet. Der Boden des Vorratsraums 202 und des Bauraums 203 ist mit 202' bzw. 203' bezeichnet. In dieser ersten Konfiguration wird der Bauraumbodenblock 205 durch den Bauraumbodenkern 244 mit einem daran befestigten Passstück 280 gebildet. Entsprechend wird der Vorratsraumbodenblock 204 durch den Vorratsraumbodenkern 245 mit einem daran befestigten Passstück 281 gebildet. Die Unterseite des Bauraums 203 wird durch die Oberseite 203a des Bauraumbodenblocks 205 gebildet; die seitlichen Wände des Bauraums 203 werden durch den Grundkörper 210 gebildet. Entsprechend wird Unterseite des Vorratsraums 202 wird durch die Oberseite 202a des Vorratsraumbodenblocks 204 gebildet; die seitlichen Wände des Vorratsraums 202 werden durch den Grundkörper 210 gebildet. Überschüssiges Pulver (dargestellt durch den gestrichelt eingezeichnete Pfeil) wird gemäß der Darstellung in der Zeichnung ganz rechts nach unten in einen (nicht gezeigten) Auffangbehälter abgelassen.
Fig. 15c stellt nun eine Längsschnittsansicht einer zweiten Konfiguration/Betriebsart der Vorrichtung 200, nach deren Umbau dar. Die Passstücke 280 und 281 sind nicht mehr Teil des Bauraumbodenblocks 205 bzw. des Vorratsraumsbodenblocks 204; sie sind auch nicht mehr mit dem Bauraumbodenkern 244 bzw. dem Vorratsraumbodenkern 245 verbunden. Stattdessen sind die280 und 281 fest mit dem Grundkörper 210 verbunden und bilden jeweils eine Seitenwände des Bauraums 202' bzw. des Vorratsraums 203' der zweiten Konfiguration. Der Bauraums 202' und der Vorratsraum 203' der zweiten Konfiguration sind daher im Vergleich zu dem Bauraum 202 und der Vorratsraum 203 der ersten Konfiguration (Fig. 15b) verkleinert. Der besondere Vorteil dieser erfindungsgemäßen Art der Bauraumverkleinerung ist, dass die volle Höhe des Raums, z.B. Bauraum und/oder Vorratsraum, in beiden Konfigurationen/Betriebsarten verwendet werden kann. Das Passstück 280 weist einen absichtlichen Spalt oder Schlitz 233 auf, durch welchen in der zweiten Konfiguration überschüssiges Pulver (angedeutet durch den gestrichelt eingezeichnet Pfeil) nach unten in einen (nicht eingezeichneten) Pulverauffangbehälter abgelassen wird. Vorzugsweise ist der Pulverauffangbehälter unter beiden Stellen, an welchen Pulver abgelassen wird angeordnet, so dass die Vorrichtung mit einem Pulverauffangbehälter in beiden Konfigurationen betrieben werden kann. Die (nicht eingezeichnete) Rakel muss daher in der zweiten Konfiguration lediglich bis zur Höhe des Spalts 233 fahren und kann dann umkehren, was zu einer erheblichen Zeitersparnis bei der Fertigung führt.
Fig. 15d stellt eine Ansicht entsprechend Fig. 15a dar, allerdings für die zweite Konfiguration gemäß Fig. 15c.

### Zahlenbeispiel zur Quantifizierung der Vorteile der Erfindung

Die wichtigsten Vorteile der Erfindung werden dadurch erreicht, dass möglichst wenig Pulver in das Pulverüberlaufgefäß gelangt.

### A) Investitionskosten

### Hierzu ein Beispiel:

Der Bauraum 1 einer Anlage habe ein Volumen von 100*100*20 mm, der Bauraum 2, der bei Verwendung der Erfindung konfiguriert werden kann, habe ein Volumen von 15*15*20 mm. Wenn der Anwender nicht den kompletten Bauraum 1 mit Goldpulver füllen muss, sinkt sein Investitionsbedarf.

Wenn ein Bauraum vom (X*Y*Z) von beispielsweise 100mm *100mm *20 mm für den Einsatz von Goldpulver 15mm*15mm*20mm reduziert wird, so sinkt der Investitionsbedarf von Goldpulver von 200 cm³ auf 4,5 cm³, also um ca. 98%. Die eingesparten ca. 195,5 cm³ Goldpulver haben einen Markpreis von ca. EUR 100.000 (Stand September 2018).

### B) Laufende Kosten

Auch die Substratplatte, welche aus dem gleichen Material (im Beispiel Gold) sein muss, verkleinert sich entsprechend, hier von 100 cm² auf 2,25 cm². Während das Pulver nach dem Aussieben wiederverwendet werden kann, sind die Substratplatten nach dem Abtrennen des Formkörpers nicht mehr brauchbar und werden entsorgt oder zur Materialwiederverwertung gegeben. Der Neukauf oder Wiederankauf von wiederaufbereiteten Platten ist teuer (hohe Preisdifferenz). Die Kosten werden bei Verwendung kleinerer Substratplatten erheblich gesenkt.

Teilweise wird, nach Stand der Technik, auch das Pulver aus dem Pulverüberlaufgefäß vollständig entsorgt oder einem Wiederverwertungsbetrieb zugeführt, um nur Pulver höchster Qualität zu verarbeiten. Dann bezieht sich die hohe Preisdifferenz auch auf das Pulver im Bereich der laufenden Kosten. Das erhöht die laufenden Kosten zusätzlich. Entsprechend groß ist das Einsparpotential.

Die laufenden Kosten sinken ferner durch den geringeren Lagerbestand von unter Sauerstoffausschluss zu lagerndem Pulver und wegen des geringeren Diebstahl-Risikos.

### C) Geschwindigkeit des Bauprozesses

Der Zeitbedarf für einen Bauprozess setzt sich im Wesentlichen aus der Bestrahlungszeit und den Fahrzeiten für die Rakel und für die Bodenblöcke des Bauraums und ggf. des Versorgungsraums zusammen. Hierzu ein Beispiel in drei Schritten:
1. Die Bauraum-Grundfläche und die Vorratsraum-Grundfläche einer Anlage seien jeweils 100mm*100mm.
   Ein quaderförmiges Formteil aus Stahl der Größe (X*Y*Z) 95mm *95mm *15mm soll in Schichten von 25µm gebaut werden. Im inneren des Bauteils wird eine Wabenstruktur gebaut. Die Bestrahlungszeit für eine Schicht beträgt (limitiert durch die Leistung des Lasers) 20 Sekunden. Die Bewegungsstrecke der Rakel sei 18 cm. Die Zeit für die primäre und sekundäre Bewegung der Rakel über diese Strecke beträgt insgesamt 4 Sekunden. Der Bodenblock des Vorratsraums wird während der Bestrahlungszeit angehoben. Der Bodenblock des Bauraums wird gleichzeitig mit der sekundären Bewegung der Rakel abgesenkt.
   ->Pro Zyklus wird eine Zeit von 24 Sekunden benötigt. Die Zahl der Schichten beträgt 800. Die Bauzeit insgesamt beträgt 5 h 20 min.
2. In dieser Anlage werde ein zweites quaderförmiges Formteil der Größe 10mm*10mm*15mm, ebenfalls mit Wabenstruktur, gebaut.
   ->Die Bestrahlungszeit für eine Schicht verkürzt sich proportional zur bestrahlenden Fläche von 22 Sekunden auf 22*(95*95)/(10*10)=0,221 Sekunden. Die Zeit für die primäre und sekundäre Bewegung der Rakel über die unveränderte Strecke von 18 cm bleibt bei 4 Sekunden. Somit wird pro Zyklus eine Zeit von 4,221 Sekunden benötigt. Die Bauzeit beträgt insgesamt 56 min 17 sec.
3. Nun werde das zweite Formteil mit einem erfindungsgemäßen Beschichter nach Punkt C und Punkt D gebaut, in einer Konfiguration mit einer Bauraum-Grundfläche von 15mm*15mm und einer Vorratsraum-Grundfläche von ebenfalls 15mm*15mm. Der Vorratsraum und der Bauraum haben einen Abstand von 10mm. Das Bauraum-Passstück hat einen Spalt, so dass das Pulver direkt in ein Pulverauffanggefäß nach Punkt 2 fällt. Der Fahrweg der Rakel verkürzt sich auf 5,0 cm.
   -> Die Bestrahlungszeit für eine Schicht liegt wie unter (2) bei 0,221 Sekunden. Die Zeit für die primäre und sekundäre Bewegung der Rakel über die verkürzte Strecke von 5cm verkürzt sich auf 1,111 Sekunden. Somit wird pro Zyklus eine Zeit von 1,332 Sekunden benötigt. Die Bauzeit beträgt dann insgesamt 17 min 46 sec anstelle von 56 min 17 sec infolge eingesparter Zeiten zur Bewegung der Rakel.

Die Erfindung führt zu einer erheblich verkürzten Bauzeit bei kleinen Baufeldern. Dies geschieht selbst dann, wenn, wie im Beispiel, bei voller Ausnutzung des Baufeldes nicht die Bewegungszeit für die Rakel, sondern die Leistung des Lasers die Bestrahlungszeiten limitiert.

Die Einsparung im Beispiel beträgt fast 40 Minuten. Dazu kommen noch einmal ca. 3 Minuten Zeitersparnis bei einer manuellen Tätigkeit, weil nämlich die Pulvermenge die manuell ausgesiebt werden muss, um 98 % reduziert ist.

### Die Erfindung kann auch folgendermaßen zusammengefasst werden:

A Beschichter für SLM oder SLS,
   bei welchem verschiedenen Bauraum-Grundflächen konfiguriert werden können.
B Beschichter nach Punkt A, bei dem durch Spalten eines konfigurierten Bauraums herabfallendes Pulver in einem Pulverauffanggefäß gesammelt wird.
C Beschichter nach Punkt B, bei dem es sich bei dem Pulverauffanggefäß um das einzige aktive Pulverauffanggefäß am Beschichter handelt.
D Beschichter nach einem oder mehreren der Punkte A-C,
   - welcher einen Bauraumausschnitt aufweist, dessen Grundfläche größer als die des größten Bauraums ist und
   - bei dem die Konfiguration durch Bauraum-Passstücke erfolgt, welche in bestimmungsgemäßer Einbaulage relativ zum Grundrahmen des Beschichters fest stehen.
E Beschichter nach einem oder mehreren der Punkte A-C,
   - bei dem die Konfiguration durch Bauraum-Passtücke erfolgt, welche in bestimmungsgemäßer Einbaulage relativ zum Grundrahmen des Beschichters fest stehen
   - bei dem zur Konfiguration des größten Bauraums kein Passstück eingesetzt wird.
F (außerhalb der Systematik)
   Beschichter nach einem oder mehreren der Punkte A-E,
   - wobei der Beschichter einen Bodenblock aufweist, welcher mit dem größten Bauraum eine eng schließende Bauraumeinheit bildet und
   - je ein auf den Bodenblock aufgesetztes Bauraumboden-Passstück mit einem der verbleibenden Bauräume eine eng schließende Bauraumeinheit bildet.
G Beschichter nach einem oder mehreren der Punkte A-E, wobei
   - der Beschichter einen Bauraum-Bodenkern aufweist und
   - verschiedene Formen des Bodenblocks des Bauraums durch Bauraumboden-Passstücke konfiguriert werden können welche in bestimmungsgemäßer Einbaulage relativ zum Bauraum Bodenkern fest stehen.
H Beschichter nach Punkt G,
   - bei dem der Bauraum-Bodenkern mit dem kleinsten Bauraum eine eng schließende Bauraumeinheit bildet.
I Beschichter nach Punkt G oder H,
   wobei es sich bei mindestens einem der Bauraum-Passstücke und einem der Bauraumboden Passstücke um dasselbe Teil handelt.
J Beschichter nach einem oder mehreren der Punkte A-I,
   wobei mindestens eine der Bauraum-Grundflächen der Geometrie eines Formkörpers von bestimmender Größe angepasst ist.
K Skalierung der Pulverversorgung je nach Bauraum,
   anzuwenden bei einem Beschichter nach einem oder mehreren der Punkte A-J.
L Beschichter nach einem oder mehreren der Punkte A-J,
   bei dem verschiedene Vorratsraum-Grundflächen konfiguriert werden können.
M Beschichter nach einem oder mehreren der Punkte A-J oder L,
   bei dem die Pulverbedarfsfunktionen von mindestens zwei Bauraums-Grundflächen im Verhältnis zueinander konstant sind.

Die Erfindung wurde vorstehend anhand von bevorzugten Ausführungsformen derselben näher erläutert. Für einen Fachmann ist es jedoch offensichtlich, dass unterschiedliche Abwandlungen und Modifikationen gemacht werden können, ohne von dem der Erfindung zugrundeliegenden Gedanken abzuweichen.

### Bezuqszeichenliste:

1 oberste Pulverschicht im Bauraum
2 Vorratsraum
3,3a,3b,3c Bauraum
4 Bodenblock des Vorratsraums
5 Bodenblock des Bauraums
6 pulverförmiger Werkstoff, schraffiert dargestellt
7 Pulveransammlung
8 Rakel
9 Beschichter
10 Grundrahmen
11 Pulverüberlaufgefäß
12 Substratplatte
13a, 13b Schnittebene
14 ein Formkörper oder mehrere Formkörper
15 primäre Bewegung der Rakel
18 Fahrbereichsfläche
24 X-Dimension
25 Y-Dimension
26 Z-Dimension
30 Bauraumausschnitt
31, 31a, 315, 310 Bauraum-Passstück
33 absichtlicher Spalt
34 bevorzugte Befestigungszone am Bauraum-Passstück
38a, 38b Vorratsraum-Passstück
40 Winkelkonstruktion
41 Aufhängehakenkonstruktion
42 Linearversteller mit Motor
43 Pulverfalle
44 Bauraum-Bodenkern
48 herabfallendes Pulver
49 kombiniertes Pulverauffang- und Pulverüberlaufgefäß
50 Halter gegen Abrutschen des Bauraum-Passstücks
51 Kompensationsteil
52 Linien für die Durchzeichnung zwischen Seitenansicht und Aufsicht
55 Dreh-Versteller für die Rakel
56 Winkelbereich des Vorratsraumes
57 Winkelbereich des Bauraums
58 Radiuswert Y1
59 Radiuswert Y2
60, 60a Bauraumboden-Passstück
61 Halter gegen Abrutschen des Bauraumboden-Passstücks
71 Höhe des Bauraums
72 halbe Höhe des Bauraums
73 Schraubverbindung
80 Doppelfunktionspassstück
81 Elektromagnet, inaktiv
82 Elektromagnet, aktiv
90 Umriss-Zeichnung
91 Linie
92 Bogenstück
93 Endpunkt einer Linie oder eines Bogenstücks
100 Bauraum-Grundfläche 1
101 Bauraum-Grundfläche 2
102 Pulverversorgungsfunktion zur Bauraum-Grundfläche 1
103 Pulverversorgungsfunktion zur Bauraum-Grundfläche 2
104 Koordinatensystem: nach rechts Y, nach oben die Pulverbedarfsfunktion
105 Länge des Bauraums 2 am Ort Y₀
106 Ort Y₀
107 Funktionswert Q₁
108 Funktionswert P₁
110 Skalierungspfeile
111 skalierte Pulverversorgungsfunktion
112 Mittelplateau
200 Vorrichtung
202, 202' Vorratsraum
203, 203' Bauraum
202a, 202'a Vorratsraumboden
203a, 203'a Bauraumboden
210 Grundrahmen bzw. Grundkörper
233 Spalt
244 Bauraumbodenkern
245 Vorratsraumbodenkern
280 (Bauraum-)Passstück
281 (Vorratsraum-)Passstück

## Patentansprüche

1. Vorrichtung zum selektiven Laserschmelzen und/oder Lasersintern mit einem Grundkörper, welche wenigstens einen Raum aufweist, wobei der wenigstens eine Raum ein Bauraum und/oder ein Vorratsraum für ein Pulver ist, wobei die Vorrichtung ferner wenigstens ein Passstück aufweist, wobei im Betrieb das wenigstens eine Passstück in dem wenigstens einen Raum angeordnet ist, wobei in einer ersten Konfiguration das wenigstens eine Passstück vertikal relativ zu dem Grundkörper bewegbar ist und in einer zweiten Konfiguration das wenigstens eine Passstück mit dem Grundkörper fest verbunden ist.

2. Vorrichtung nach Anspruch 1, **dadurch gekennzeichnet, dass** eine in bestimmungsgemäßer Einbaulage obere Seite des wenigstens einen Passstücks in der ersten Konfiguration einen Boden des Raums bildet.

3. Vorrichtung nach Anspruch 1 und/oder 2, **dadurch gekennzeichnet, dass** eine in bestimmungsgemäßer Einbaulage seitliche Seite des wenigstens einen Passstücks in der zweiten Konfiguration eine seitliche Wand des Raums bildet.

4. Vorrichtung nach einem oder mehreren der Ansprüche 1 bis 3, **dadurch gekennzeichnet, dass** in der zweiten Konfiguration der Boden des Raums vertikal relativ zu dem wenigstens einen Passstück bewegbar ist.

5. Vorrichtung nach einem oder mehreren der Ansprüche 1 bis 4, **dadurch gekennzeichnet, dass** der Raum der Bauraum ist, wobei das wenigstens eine Passstück einen in bestimmungsgemäßer Einbaulage in der zweiten Konfiguration vertikalen Spalt aufweist, welcher zur Abfuhr des überschüssigen Pulvers vorgesehen ist.

6. Vorrichtung nach Anspruch 5, **dadurch gekennzeichnet, dass** das wenigstens eine Passstück in der ersten Konfiguration keinen vertikalen Spalt aufweist.

7. Vorrichtung nach einem oder mehreren der Ansprüche 1 bis 6, **dadurch gekennzeichnet, dass** die bestimmungsgemäße Einbaulage des wenigstens eine Passstück in der ersten Konfiguration eine andere Orientierung des wenigstens einen Passstücks als die Orientierung desselben in der bestimmungsgemäßen Einbaulage der zweiten Konfiguration aufweist.

8. Vorrichtung nach einem oder mehreren der Ansprüche 1 bis 7, **dadurch gekennzeichnet, dass** der Grundkörper die Wände des Raums in der ersten Konfiguration aufweist.

9. Vorrichtung nach einem oder mehreren der Ansprüche 1 bis 8, **dadurch gekennzeichnet, dass** das wenigstens eine Passstück wenigstens eine Wand des Raums in der zweiten Konfiguration bildet.

10. Verwendung wenigstens eines Passstücks zur Größenänderung eines Bauraums und/oder eines Vorratsraums bei einer Vorrichtung zum selektiven Laserschmelzen und/oder Lasersintern mit einem Grundkörper, wobei im Betrieb das wenigstens eine Passstück in dem Bauraum und/oder dem Vorratsraum angeordnet ist, wobei in einer ersten Betriebsart das wenigstens eine Passstück vertikal relativ zu dem Grundkörper bewegbar ist und ein einer zweiten Betriebsart das wenigstens eine Passstück mit dem Grundkörper fest verbunden ist.

11. Verwendung nach Anspruch 10, **dadurch gekennzeichnet, dass** eine in bestimmungsgemäßer Einbaulage obere Seite des wenigstens einen Passstücks in der ersten Betriebsart einen Boden des Bauraums oder Vorratsraums bildet.

12. Verwendung nach Anspruch 10 und/oder 11, **dadurch gekennzeichnet, dass** eine in bestimmungsgemäßer Einbaulage seitliche Seite des wenigstens einen Passstücks in der zweiten Betriebsart eine seitliche Wand des Bauraums oder Vorratsraums bildet.

13. Verwendung nach einem oder mehreren der Ansprüche 10 bis 12, **dadurch gekennzeichnet, dass** das wenigstens eine Passstück einen in bestimmungsgemäßer Einbaulage vertikalen Spalt aufweist, welcher in der zweiten Betriebsart zur Abfuhr überschüssigen Pulvers vorgesehen ist.

14. Verfahren zum selektiven Laserschmelzen und/oder Lasersintern mit einer Vorrichtung nach einem der Ansprüche 1 bis 9.

15. Verfahren zum selektiven Laserschmelzen und/oder Lasersintern nach Anspruch 14, **gekennzeichnet durch** folgende Schritte:
- Herstellen eines ersten Werkstücks in der ersten Konfiguration mittels Laserschmelzen und/oder Lasersintern;
- Umkonfigurieren der Vorrichtung von der ersten Konfiguration in die zweite Konfiguration; und
- Herstellen eines zweiten Werkstücks in der zweiten Konfiguration mittels Laserschmelzen und/oder Lasersintern.
